# EUROPÄISCHE PATENTSCHRIFT

(11) **EP 2 077 215 B1**
(45) Veröffentlichungstag und Bekanntmachung des Hinweises auf die Patenterteilung: **01.08.2012**
(21) Anmeldenummer: 08019164.6
(22) Anmeldetag: 03.11.2008
(51) Int. Cl.: B60T 13/68, B60T 17/04, B60T 17/08

(54) **Bremsanlage für ein Fahrzeug**
Brake system for vehicles
Système de frein pour vèhicules

(30) Priorität: 07.01.2008 DE 102008003381
(43) Veröffentlichungstag der Anmeldung: 08.07.2009
(73) Patentinhaber: WABCO GmbH, 30453 Hannover (DE)
(72) Erfinder: Cornelius, Christian, 31832 Springe (DE); Förster, Henning, 31171 Nordstemmen (DE); Jantz, Olaf, 30451 Hannover (DE); Rosendahl, Hartmut, 30167 Hannover (DE); Strache, Wolfgang, 30966 Hemmingen (DE)

(56) Entgegenhaltungen:
- EP-A- 0 278 228
- EP-A- 1 571 061
- WO-A-95/16594
- DE-A1-102005 058 799
- DE-A1-102005 060 225

## Beschreibung

Die Erfindung betrifft eine Bremsanlage für ein Fahrzeug nach dem Oberbegriff von Anspruch 1. Derartige bekannte Bremsanlagen weisen eine Bremspedaleinrichtung mit einem Bremspedal und einem Bremswertgeber auf. In Erwiderung auf eine Betätigung des Bremspedals erzeugt der Bremswertgeber ein Bremsanforderungssignal. Ferner weisen derartige Bremsanlagen eine elektronische Steuereinrichtung auf, welche in Erwiderung auf das Bremsanforderungssignal wenigstens ein Bremskraftsteuersignal zur Steuerung der Bremskraft wenigstens einer Bremse der jeweiligen Bremsanlage erzeugt, insbesondere zum Erhöhen, Halten bzw. Vermindern der Bremskraft in Abhängigkeit vom Bremsanforderungssignal. Die Steuereinrichtung steuert auf diese Weise zumindest die Betriebsbremsfunktion der Bremsanlage. Die Steuereinrichtung ist bei diesen bekannten Bremsanlagen in einem Zentralmodul in der Nähe der Bremspedaleinrichtung im Innenraum des Fahrzeugs in einer Kabine angeordnet, in der wenigstens auch ein Fahrersitz vorgesehen ist.

Von der Kabine führen herkömmlicherweise zahlreiche elektrische Leitungen vom Zentralmodul zu diversen Komponenten der Bremsanlage, insbesondere zu einem Hinterachsmodul und ggf. zu einem Vorderachsmodul, wobei die Module Ventileinrichtungen zur Modulation von pneumatischen Drücken zur pneumatischen Betätigung von Bremszylindern aufweisen. Diese Module sind an einem Tragwerk eines Fahrzeugs befestigt. Dieses Tragwerk wird bei Lastkraftwagen üblicherweise von einem Leiterrahmen gebildet. Omnibusse weisen demgegenüber oftmals eine selbsttragende Karosserie als Tragwerk auf. Aufgrund der Vielzahl elektrischer Leitungen vom und zum Zentralmodul führen dicke Kabelstränge von der Kabine zum Tragwerk. Die Verlegung derartiger Kabelstränge ist komplex und aufwändig, insbesondere da zwischen Kabine und Tragwerk regelmäßig Relativbewegungen stattfinden, sei es aufgrund von Federungsbewegungen der Kabine gegenüber dem Tragwerk oder aufgrund einer Kippbarkeit der Kabine gegenüber dem Tragwerk. Letzteres ist üblicherweise bei Nutzfahrzeugen, insbesondere Lastkraftwagen vorgesehen, um an den unter der Fahrerkabine angeordneten Motorraum zu gelangen. Dicke Kabelstränge flexibel zu verlegen, ohne ihre Zuverlässigkeit zu beeinträchtigen, ist jedoch technisch anspruchsvoll und daher teuer.

EP 1 571 061 A1 betrifft eine elektrisch gesteuerte pneumatische Bremsanlage für ein Fahrzeug, bei dem druckluftbetätigbare Bremszylinder zur Betätigung von Radbremsen vorgesehen sind, wobei wenigstens ein Bremszylinder als Federspeicher-Bremszylinder ausgebildet ist, und mit wenigstens einem elektrisch steuerbaren Bremskreis sowie wenigstens einem als Redundanz vorgesehenen pneumatisch steuerbaren Bremskreis. Hiervon ausgehend wird eine elektrisch gesteuerte pneumatische Bremsanlage für ein Fahrzeug angegeben, welche im Redundanzfall einen höheren Bedienkomfort und eine größere Sicherheit für den Stra-βenverkehr ermöglicht. Dies wird dadurch erreicht, dass im Redundanzfall mittels pneumatischer Steuerung des Federspeicherteils des Federspeicher-Bremszylinders das Fahrzeug durch Betätigung eines Bremspedals abstufbar abbremsbar ist.

Der Erfindung liegt daher das Problem zugrunde, derartige bekannte Bremsanlagen zu verbessern. Insbesondere sollen die Verlegung von Leitungen vereinfacht, die Verlegung und Zuverlässigkeit von Kabelsträngen verbessert, die Kosten bei der Entwicklung, eine Fehleranfälligkeit während des Betriebes und damit auch Kosten während des Betriebes gesenkt werden.

Die Erfindung löst dieses Problem mit einer Bremsanlage nach Anspruch 1, d.h. einer Bremsanlage der eingangs genannten Art, bei der die Steuereinrichtung außerhalb der Kabine an dem Tragwerk des Fahrzeugs angeordnet ist. Hierdurch verringert sich signifikant die Anzahl elektrischer Leitungen, welche von der Kabine zu den Einrichtungen am Tragwerk führen. Hierdurch können Kabelstränge zwischen Kabine und Tragwerk wesentlich dünner und damit flexibler ausfallen, was die Beweglichkeit der Kabelstränge verbessert.

Ferner vereinfacht die Verringerung der Anzahl der von der Kabine zum Tragwerk (und umgekehrt) führenden elektrischen Leitungen die Abdichtung der Kabine im Bereich einer entsprechenden Kabeldurchführung der Kabelstränge in die bzw. aus der Kabine. Abdichtungsprobleme durch dicke Kabelstränge können somit beseitigt bzw. signifikant verbessert werden.

Auch in der Kabine selbst reduziert sich die Anzahl elektrischer Leitungen. Dies reduziert Materialkosten, Wartungskosten und Reparaturkosten. Ferner verringern kürzere Leitungswege die Störanfälligkeit der Bremsanlage, erhöhen die Ausfallsicherheit und erhöhen hierdurch auch die Sicherheit der Bremsanlage. Insbesondere bei Lastkraftwagen mit einem kippbaren Frontlenker-Fahrerhaus als Kabine führt die Anordnung der Steuereinrichtung am Tragwerk dazu, dass sich die Anzahl elektrischer Leitungen oder Datenleitungen, welche durch eine Kippbewegung der Kabine relativ zu dem Tragwerk gebogen werden müssen, gegenüber dem Stand der Technik reduziert. Darüber hinaus wird Platz in der Kabine gespart, insbesondere im Bereich der Frontablage, des Armaturenbretts bzw. Handschuhfachs oder der Bremspedaleinrichtung, wo die Steuereinrichtung nach dem Stand der Technik üblicherweise angeordnet ist.

Die Erfindung hat erkannt, dass die Anordnung der Steuereinrichtung am Tragwerk trotz des höheren Aufwands zum Schutz von Feuchtigkeit und Schmutzpartikeln wegen der Vielzahl elektrischer Leitungen, welche nun nicht mehr in die Kabine geführt werden müssen, vorteilhaft ist und die bekannten Bremsanlagen verbessert.

Ein Bremswertgeber in einer Bremspedaleinrichtung erzeugt ein elektrisches Bremsanforderungssignal. Die Steuereinrichtung erzeugt nach Maßgabe des Bremsanforderungssignals wenigstens ein Bremskraftsteuersignal, welches einer bevorzugt ebenfalls an dem Tragwerk angeordneten Steuerungslogik zugeleitet wird. Das Bremskraftsteuersignal ist ein analoges oder digitales elektrisches, und/oder optisches Signal zur Steuerung der Bremskraft wenigstens einer Bremse der Bremsanlage. Dabei steuert das Bremskraftsteuersignal nicht direkt Betätigungsorgane der Bremse, sondern die Steuerungslogik an.

Die Steuerungslogik ist derart ausgebildet, dass sie Betätigungsorgane der Bremse nach Vorgabe des Bremskraftsteuersignals ansteuert. Hierzu weist die Steuerungslogik bevorzugt Leistungselektronikkomponenten zur Bereitstellung von elektrischer Leistung für die Betätigung von Bremskomponenten auf. Im Falle einer elektropneumatisch betätigbaren Bremse steuert die Steuerungslogik ein oder mehrere Ventile zur Modulation eines pneumatischen Drucks, mittels dessen ein Bremszylinder der Bremse betätigt wird. Im Falle einer elektromechanisch betätigbaren Bremse steuert die Steuerungslogik eine Betätigung elektrischer Stellorgane entsprechender Bremsen. Für auf andere Art betätigbare Bremsen, bspw. Retarder, sind entsprechend angepasste Steuerungslogiken vorgesehen. Die Steuereinrichtung ist mittels einer geeigneten Steuerungslogik in der Lage, jede Art von Bremsen zu betätigen. Darüber hinaus kann die Steuereinrichtung im Falle einer bremskraftgeregelten bzw. verzögerungsgeregelten Bremsanlage eine Bremskraftregelung oder eine Verzögerungsregelung aufweisen.

Die Steuereinrichtung befindet sich in einem Gehäuse, welches einen Schutz vor Wasser und Schmutzpartikeln bildet. Bei einer speziellen Ausführungsform ist das Gehäuse zweiteilig mit einem Innengehäuse und einem Außengehäuse ausgebildet. Im Bereich von Deckeln oder Öffnungen sind die Gehäuse mit Dichtungen abgedichtet. Kabelverbindungen führen durch Öffnungen im Innengehäuse zu Steckerbuchsen, welche in das Außengehäuse eingelassen oder an diesem Außengehäuse angeordnet sind. Verbindungen von und zu der Steuereinrichtung sind durch das Einstecken von Steckern in diese Steckerbuchsen herstellbar.

Bevorzugt weist die Bremsanlage ein oder mehrere Module auf, welche die Steuereinrichtung und wenigstens eine zur Funktionalität der Steuereinrichtung, insbesondere der Betriebsbremsfunktionalität, zusätzliche Funktionalität, insbesondere eines Feststellbremsmodulators zur Bereitstellung einer Feststellbremsfunktion eines Antiblockiersystems zur Bereitstellung einer Antiblockierfunktion, eines Fahrdynamikregelungsmoduls zur Regelung der Fahrdynamik bzw. der dynamischen Fahrstabilität und/oder einer elektronisch gesteuerten Luftaufbereitung, umfasst. Besonders bevorzugt ist die Steuereinrichtung hierbei in ein Hinterachsmodul bzw. einen Hinterachsmodulator integriert, welcher ggf. zugleich ein Feststellbremsmodulator zur Modulation eines pneumatischen Drucks für eine Feststellbremsfunktion von Bremsen des Fahrzeugs ist. Darüber hinaus ist auch eine Integration der Steuereinrichtung in einen Vorderachsmodulator, das Fahrdynamikregelungsmodul bzw. ESC (Electronic Stability Control)-Modul oder ein elektronisches Luftaufbereitungsmodul bzw. EAPU (Electronic Air Processing Unit)-Modul möglich. Auch eine Aufteilung der Funktionen auf mehrere Module ist optional vorgesehen. Diese Module sind dann über elektrische Leitungen bzw. einen Datenbus mit der Bremspedaleinrichtung und/oder untereinander verbunden. Durch die Integration in bestehende Module werden Kosten gesenkt, insbesondere da sich hierdurch die Anzahl der elektronischen Steuereinrichtungen, der elektrischen Leitungen und die Anzahl abgedichteter und vor Schmutz und Nässe schützender Gehäuse signifikant reduziert.

Vorzugsweise erzeugt die Steuereinrichtung in einem ersten Modul ein erstes Bremskraftsteuersignal. In Erwiderung auf dieses erste Bremskraftsteuersignal ist eine erste Bremse an wenigstens einem Rad einer ersten Achse des Fahrzeugs betätigbar. Diese erste Achse ist bevorzugt eine Hinterachse und das erste Modul ein Hinterachsmodul oder Hinterradmodul, welches bevorzugt in der Nähe bzw. im Bereich der Hinterachse montiert ist. Im Falle einer elektropneumatischen Bremsanlage weist das erste Modul ein oder mehrere Ventile zur Modulation eines pneumatischen Druckes auf.

Gemäß einer Weiterbildung weist das erste Modul zusätzlich eine Antiblockiersystem(ABS)-Funktionalität auf. Hierzu ist ein erstes Radgeschwindigkeitssensiermittel für jedes Rad, welches von dem ersten Modul angesteuert wird und sich unabhängig von weiteren Rädern drehen kann, vorgesehen. Signale von dem ersten Radgeschwindigkeitssensiermittel werden von dem ersten Modul verarbeitet, wobei ein Blockieren bzw. erhöhter Schlupf des Rades ermittelt und in Erwiderung hierauf die Bremskraft an dem Rad reduziert wird.

Gemäß einer Weiterbildung weist die Bremsanlage zwei oder mehr als zwei erste Module auf. Diese ersten Module sind über eine Datenverbindung miteinander verbunden. Vorteilhaft ist hierbei insbesondere die Verwendung eines CAN-Datenbusses. Über die Datenverbindung können Daten von und zur Bremspedaleinrichtung von einem ersten Modul an ein zweites erstes Modul weitergeleitet werden, wenn nur eines dieser ersten Module mit der Bremspedaleinrichtung verbunden ist. Darüber hinaus kann die Datenverbindung für weitere Aufgaben, etwa zur Synchronisation von elektronisch geregelten Bremseingriffen an Rädern einer Achse oder unterschiedlicher Achsen des Fahrzeugs verwendet werden. Die beiden ersten Module sind vorzugsweise Hinterachsmodule oder Hinterradmodule.

Vorzugsweise weist die Erfindung neben wenigstens einem ersten Modul noch wenigstens ein zweites Modul auf, mittels dessen eine zweite Bremse an wenigstens einem Rad einer zweiten Achse des Fahrzeugs betätigt werden kann. Dieses zweite Modul übernimmt die direkte Ansteuerung der zweiten Bremse. Im Falle einer pneumatisch betätigbaren Bremse weist das zweite Modul ein oder mehrere Ventile zur Modulation eines pneumatischen Druckes auf. Die zweite Bremse wird dann mittels Druckluft von diesem Ventil bzw. diesen Ventilen betätigt.

Die zweite Achse ist vorzugsweise eine Vorderachse oder eine Zusatzachse des Fahrzeugs. Entsprechend ist das zweite Modul ein Vorderachsmodul oder Vorderradmodul bzw. Zusatzachsmodul oder Zusatzradmodul. Mittels eines Radmoduls ist eine an einem Rad befindliche zweite Bremse betätigbar. Ein Achsmodul betätigt hingegen zweite Bremsen an wenigstens zwei Rädern der zweiten Achse.

Die Steuereinrichtung erzeugt in einer ersten Variante in dem ersten Modul ein zweites Bremskraftsteuersignal und stellt es einer Steuerungslogik bereit. Diese Steuerungslogik sendet in Erwiderung hierauf Signale zum Betätigen der zweiten Bremse bzw. zum Ansteuern von einem oder mehreren Ventilen an das zweite Modul. Für eine Rückkopplung bei der Steuerung des Bremsvorgangs sendet das zweite Modul ggf. Messsignale der Betätigung an das erste Modul zurück. Diese Messsignale sind bei einer pneumatisch betätigbaren Bremse Drucksignale von Drucksensoren in diesem zweiten Modul, welche einen mittels des Ventils bzw. der Ventile ausgesteuerten pneumatischen Druck messen.

Bevorzugt weist in dieser ersten Variante die Steuerungslogik, welche in dem ersten Modul angeordnet ist, Leistungselektronikkomponenten auf. Mittels dieser Leistungselektronikkomponenten ist elektrische Leistung für die Betätigung von Bremskomponenten der zweiten Bremse an dem Rad der zweiten Achse bereitstellbar. Die Bremskomponenten sind hierbei Elektromagnetventile bzw. elektromechanische Aktuatoren. Über eine elektrische Leitung zwischen dem ersten Modul und dem zweiten Modul sind die Bremskomponenten in dem zweiten Modul direkt von den Leistungselektronikkomponenten in dem ersten Modul ansteuerbar. Es ist somit keine Steuerungselektronik in dem zweiten Modul erforderlich.

In einer zweiten Variante verbleibt die Steuereinrichtung zwar im erstem Modul. Eine Steuerungslogik zur Betätigung der zweiten Bremse ist jedoch nun in das zweite Modul verlagert. Die Steuerungslogik benötigt ein Bremskraftsteuersignal zur Betätigung der zweiten Bremse. Das erste Modul sendet deshalb ein Bremskraftsteuersignal über eine Datenverbindung, welche insbesondere ein CAN-Datenbus sein kann, an das zweite Modul, welches anhand dieses Bremskraftsteuersignals die Bremse betätigt, insbesondere ein oder mehrere Ventile in dem zweiten Modul ansteuert.

Bevorzugt weist in dieser zweiten Variante die Steuerungslogik, welche in dem zweiten Modul angeordnet ist, Leistungselektronikkomponenten zur Bereitstellung von elektrischer Leistung für die Betätigung von Bremskomponenten der zweiten Bremse an dem Rad der zweiten Achse auf. Die Steuereinheit in dem ersten Modul steuert somit über die Datenverbindung die Steuerungslogik und die Leistungselektronikkomponenten in dem zweiten Modul, welche wiederum diese Bremskomponenten ansteuern.

Gemäß einer Weiterentwicklung ist auch eine Antiblockier- bzw. ABS-Funktionalität für das Rad der zweiten Achse vorgesehen. Hierzu weist dieses Rad der zweiten Achse ein zweites Radgeschwindigkeitssensiermittel auf. Ein Blockieren bzw. erhöhter Schlupf dieses Rades wird von einem ersten oder einem zweiten Modul festgestellt und daraufhin die Bremskraft an diesem Rad reduziert.

In einer ersten Variante zur Herstellung der ABS-Funktionalität ist das zweite Radgeschwindigkeitssensiermittel mit dem ersten Modul verbunden und sendet Signale an dieses erste Modul. Dieses erste Modul erkennt ein Blockieren bzw. einen erhöhten Schlupf des Rades an der zweiten Achse und reduziert die Bremskraft der zweiten Bremse an diesem Rad. Das erste Modul steuert hierzu im Falle einer pneumatisch betätigbaren Bremse entweder ein oder mehrere Ventile in dem zweiten Modul oder wenigstens eine separate Ventileinheit an, welche zum ,Reduzieren des Bremsdrucks der zweiten Bremse eine Druckluftleitung zu dieser zweiten Bremse zumindest teilweise entlüftet.

In einer zweiten Variante zur Herstellung der ABS-Funktionalität, welche eine Datenverbindung zwischen dem ersten und dem zweiten Modul aufweist, ist das zweite Radgeschwindigkeitssensiermittel mit dem zweiten Modul verbunden. Das zweite Modul sendet über die Datenverbindung Daten sensierter Drehzahlen an das erste Modul. Ein Blockieren bzw. erhöhter Schlupf des Rades an der zweiten Achse wird wiederum von dem ersten Modul ermittelt, welches in Erwiderung auf ein festgestelltes Blockieren bzw. einen erhöhten Schlupf die Bremskraft der zweiten Bremse an diesem Rad analog zu der ersten Variante reduziert.

In Abweichung zu dieser zweiten Variante ermittelt bei einer dritten Variante bereits das zweite Modul anhand der sensierten Drehzahlen ein Blockieren bzw. einen erhöhten Schlupf des Rades an der zweiten Achse. Ein erkanntes Blockieren bzw. ein erkannter erhöhter Schlupf ist über die Datenverbindung dem ersten Modul übermittelbar, welches in Erwiderung auf ein ermitteltes Blockieren bzw. einen ermittelten erhöhten Schlupf des Rades an der zweiten Achse die Bremskraft der zweiten Bremse an diesem Rad analog zu den ersten beiden Varianten reduziert.

Eine vierte Variante ermittelt ein Blockieren bzw. einen erhöhten Schlupf des zweiten Rades in dem zweiten Modul. Hierzu ist das zweite Radgeschwindigkeitssensiermittel an dem Rad der zweiten Achse mit dem zweiten Modul verbunden und übermittelt Signale an dieses zweite Modul. Das zweite Modul reduziert in Erwiderung auf ein erkanntes Blockieren bzw. einen erhöhten Schlupf des Rades der zweiten Achse die Bremskraft der zweiten Bremse an diesem Rad. Im Falle einer pneumatisch betätigbaren Bremse steuert es hierfür ein oder mehrere Ventile in dem zweiten Modul oder wenigstens eine separate Ventileinheit an, welche eine Druckluftleitung zu der zweiten Bremse zumindest teilweise entlüftet.

In einer Weiterbildung weist die Bremsanlage wenigstens zwei zweite Module auf, welche von der Steuereinrichtung in dem ersten Modul ansteuerbar sind. Von einem ersten Modul bzw. von einer einzigen Steuereinrichtung sind somit auch Bremsen an mehr als zwei Achsen steuerbar. Somit wird bspw. lediglich ein erstes Modul bzw. eine Steuereinrichtung für ein Fahrzeug mit drei Achsen benötigt, welches hierfür ein erstes Modul und zwei zweite Module aufweist. Es spart Kosten, zwei oder mehr als zwei zweite Module von der Steuereinrichtung in einem ersten Modul anzusteuern.

Die Bremsanlage weist zur Betätigung von Bremsen bevorzugt ein oder mehrere Ventile in dem ersten und/oder dem zweiten Modul zur elektrischen Modulation eines pneumatischen Drucks auf. Über eine Druckluftleitung ist die Ventileinrichtung mit einem pneumatisch betätigbaren Bremszylinder einer Bremse verbunden. Im Falle einer ABS-Funktionalität für diese Bremse sind Ventileinheiten in der Druckluftleitung vorgesehen, welche diese Druckluftleitung zumindest teilweise entlüften können. Alternativ kann das zumindest teilweise Entlüften der Druckluftleitung auch ohne separate Ventileinheit direkt in dem ersten bzw. zweiten Modul erfolgen.

Gemäß einer vorteilhaften Weiterbildung sieht die Bremsanlage eine pneumatische Redundanz für elektropneumatisch betätigbare Bremsen vor. Der pneumatische Druck zum Betätigen der Bremse ist hierbei direkt mittels der Betätigung eines Bremspedals der Bremspedaleinrichtung aussteuerbar. Das Fahrzeug ist folglich auch bei einem Ausfall der Elektronik noch abbremsbar.

Alternativ oder zusätzlich kann eine Bremse des Fahrzeugs elektromechanisch betätigt werden. Hierzu sind elektromechanische Betätigungsorgane an der jeweiligen Bremse vorgesehen. Gerade dann, wenn elektromechanische Betätigungsorgane pneumatisch betätigbare Bremszylinder ersetzen, sind Kostenvorteile der Bremsanlage erzielbar.

Gemäß einer vorteilhaften Weiterbildung ist in einem Modul zusammen mit der Steuereinrichtung noch wenigstens ein Sensor zur Sensierung eines Fahrzustandes integriert. Unter einem Fahrzustand sind hierbei insbesondere positive und negative Beschleunigungen, ganz besonders auch Querbeschleunigungen, des Fahrzeugs zu verstehen. Der Sensor kann bspw. ein Beschleunigungssensor, Gierratensensor und/oder Neigungssensor sein und dient zur Erfassung eines Fahrzustandes, welcher bei automatischen Bremseingriffen etwa für eine Fahrdynamikregelung verwendet wird. Die Integration in ein Modul zusammen mit der Steuereinrichtung spart Kosten. Daten des Fahrzustandes können zudem über ggf. vorhandene Datenbusverbindungen zwischen Modulen der Steuereinrichtung übertragen werden, was zusätzliche elektrische Leitungen bzw. Datenleitungen und damit weitere Kosten einspart.

Gemäß einer vorteilhaften Weiterbildung ist die Steuereinrichtung redundant ausgebildet. Die Bremskraft zur Abbremsung eines Rades wird somit mehrfach elektronisch berechnet. Bspw. berechnen ein Vorderachsmodul und ein Hinterachsmodul jeweils als ein erstes Modul die Bremskraft zum Betätigen von Bremsen sowohl an der Vorderachse als auch an der Hinterachse des Fahrzeugs. Bei Ausfall eines dieser Module kann das jeweils andere Modul somit immer noch Bremskraftsteuersignale zum Betätigen der Bremsen sowohl an der Vorderachse als auch an der Hinterachse des Fahrzeugs erzeugen.

Besonders bevorzugt ist die Steuereinrichtung vierfach ausgebildet. Insbesondere weist die Bremsanlage vier Radmodule mit der Steuereinrichtung jeweils zur Erzeugung eines Bremskraftsteuersignals für wenigstens vier diesen Radmodulen zugeordneten Rädern auf. Durch die vierfache Ausbildung der Steuereinrichtung können Funktionsfehler in einem defekten Modul sicher erkannt und die Funktionen dieses Moduls durch andere redundante Module ersetzt werden. Ein Austausch eines defekten Moduls ist darüber hinaus leicht und kostengünstig herstellbar, da die redundanten Module alle gleich ausgebildet sind.

Besonders bevorzugt wird das Bremsanforderungssignal von der Bremspedaleinrichtung über eine Schnittstelle bzw. Gateway und eine Datenbusverbindung zwischen dieser Schnittstelle und der Steuereinrichtung an die Steuereinrichtung übermittelt. Die Schnittstelle ist hierbei in oder an der Kabine des Fahrzeugs vorgesehen. Die Datenbusverbindung verbindet somit Einrichtungen der Kabine mit Einrichtungen am Tragwerk. Bei einer Ausbildung der Steuereinrichtung in mehreren Modulen bzw. bei mehreren Steuereinrichtungen in mehreren Modulen können elektrische Leitungen von der Schnittstelle zu diesen Modulen führen. Alternativ kann die Datenbusverbindung in der Kabine oder vorzugsweise im Bereich des Tragwerks Verzweigungen zu mehreren Modulen der Steuereinrichtung bzw. Modulen mit der Steuereinrichtung aufweisen. Alternativ ist bevorzugt lediglich ein Modul über die Datenbusverbindung mit der Schnittstelle verbunden. Ggf. vorhandene weitere Module sind mittelbar über dieses verbundene Modul und Datenbusverbindungen zu diesem verbundenen Modul mit der Schnittstelle verbunden. Insbesondere bei Nutzfahrzeugen mit kippbarer Kabine ist die Datenbusverbindung vorteilhaft, da lediglich ein dünner Kabelstrang mit wenigen elektrischen Leitungen hierfür benötigt wird und im Falle eines Kippens der Kabine verdreht oder auf andere Weise beschädigungsfrei mechanisch belastbar ist. Darüber hinaus kann eine Datenbusverbindung im Falle eines Defekts kostengünstig ersetzt werden.

Die Schnittstelle ist gemäß einer Weiterbildung in die Bremspedaleinrichtung integriert. Dadurch werden elektrische Leitungen zwischen der Bremspedaleinrichtung und der Schnittstelle sowie ein separates Gehäuse für die Schnittstelle eingespart.

Aus Redundanzgründen können mehrere Einrichtungen der Bremsanlage und insbesondere der Bremspedaleinrichtung zweifach ausgebildet sein. Insbesondere kann die Bremspedaleinrichtung eine zweifache Energieversorgung aufweisen. Darüber hinaus kann der Bremswertgeber zwei Sensoren zur Erfassung eines Sollwertes und Erzeugung eines Bremsanforderungssignals aufweisen. Auch die Datenbusverbindung zwischen der Schnittstelle und der Steuereinrichtung sowie ggf. zwischen der Bremspedaleinrichtung und der Steuereinrichtung kann zweifach ausgebildet sein.

Über die Schnittstelle und die Datenbusverbindung sind gemäß einer Weiterbildung Daten von und/oder zu weiteren Einrichtungen in der Kabine und/oder am Tragwerk sendbar. Durch diese Bündelung von Daten werden elektrische Leitungen eingespart und somit Kosten gesenkt.

Weitere Einrichtungen in der Kabine können weitere Bedienelemente oder Einrichtungen zur Ausgabe optischer und/oder akustischer Signale sein.

Über die Schnittstelle können Bremslichter oder ein akustisches Warnsignal angesteuert, Bedienelemente der Bremsanlage in der Kabine ausgelesen, optische und/oder akustische Signale der Bremsanlage in der Kabine angesteuert, eine Einheit zur Steuerung einer weiteren unterstützenden Bremse, insbesondere ein Retader, angesteuert oder elektromotorische Komponenten im Antriebsstrang wie Starter-Generatoreinheit, Hybrid-Einheit oder ähnliches zur Bremsunterstützung angesteuert werden. Die Schnittstelle bzw. die Bremspedaleinrichtung kann zum Zwecke der Wartung und Fehleranalyse eine Schnittstelle zu einem Diagnoseanschluss, bspw. zum Anschluss eines PCs, vorsehen.

Eine üblicherweise in einem Vorderachsmodul vorhandene Elektronik, insbesondere die Steuerungslogik samt Leistungselektronikkomponenten zur Betätigung von Bremsen, kann darüber hinaus alternativ auch in die Bremspedaleinrichtung integriert sein. Bevorzugt sind jedoch Steuereinrichtung, Steuerungslogik und ggf. ein oder mehrere Ventile zur Modulation eines pneumatischen Drucks zur Betätigung der Betriebsbremse alle außerhalb der Kabine am Tragwerk des Fahrzeugs angeordnet.

Weitere vorteilhafte Ausführungsformen ergeben sich aus den Unteransprüchen sowie aus den anhand der Zeichnung näher erläuterten Ausführungsbeispielen. In der Zeichnung zeigt:
- Fig. 1: eine schematische Darstellung der Bremsanlage gemäß einem ers-ten Ausführungsbeispiel der Erfindung;
- Fig. 2: eine schematische Darstellung der Bremsanlage gemäß einem zwei-ten Ausführungsbeispiel der Erfindung;
- Fig. 3: eine schematische Darstellung der Bremsanlage gemäß einem drit-ten Ausführungsbeispiel der Erfindung;
- Fig. 4: eine schematische Darstellung der Bremsanlage gemäß einem vier-ten Ausführungsbeispiel der Erfindung;
- Fig. 5: eine schematische Darstellung der Bremsanlage gemäß einem fünf-ten Ausführungsbeispiel der Erfindung;
- Fig. 6: eine schematische Darstellung der Bremsanlage gemäß einem sechsten Ausführungsbeispiel der Erfindung;
- Fig. 7: eine schematische Darstellung der Bremsanlage gemäß einem sieb-ten Ausführungsbeispiel der Erfindung;
- Fig. 8: eine schematische Darstellung der Bremsanlage gemäß einem ach-ten Ausführungsbeispiel der Erfindung;
- Fig. 9: eine schematische Darstellung der Bremsanlage gemäß einem neun-ten Ausführungsbeispiel der Erfindung;
- Fig. 10: eine schematische Darstellung der Bremsanlage gemäß einem zehn-ten Ausführungsbeispiel der Erfindung;
- Fig. 11: eine schematische Darstellung der Bremsanlage gemäß einem elften Ausführungsbeispiel der Erfindung;
- Fig. 12: eine Anordnung der Bremsanlage an einem Fahrzeug, welches als Lastkraftwagen ausgebildet ist, in vereinfachter Darstellung und
- Fig. 13: eine Anordnung der Bremsanlage an einem Fahrzeug, welches als Omnibus ausgebildet ist, in vereinfachter Darstellung.

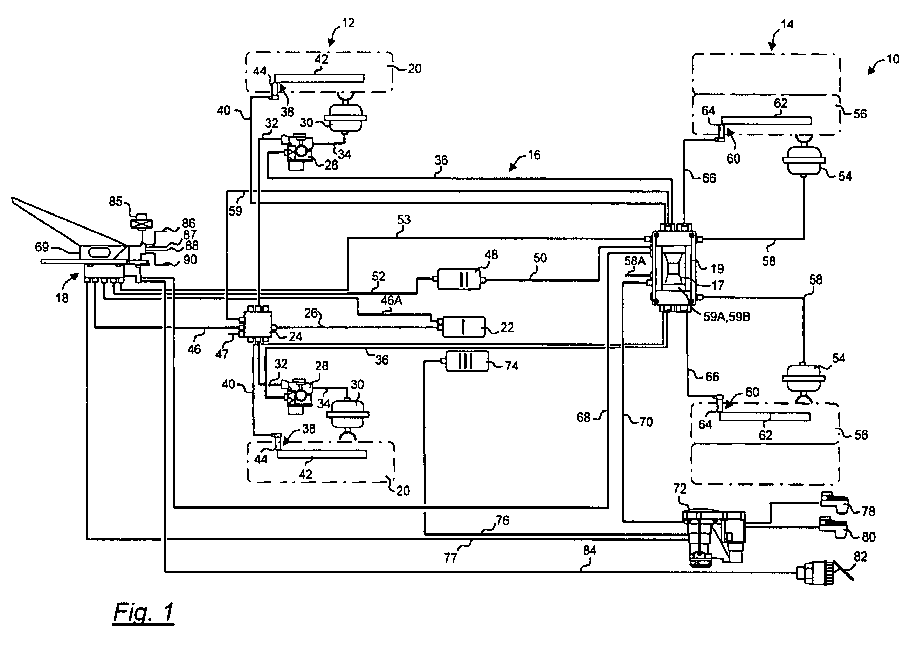

Fig. 1 zeigt schematisch ein zweiachsiges Fahrzeug 10 mit einer Vorderachse 12 und einer Hinterachse 14 sowie einer Bremsanlage 16. Die Bremsanlage 16 weist eine Steuereinrichtung 17 auf, mittels der eine Bremskraft elektronisch berechenbar und ein Bremskraftsignal in Abhängigkeit von der berechneten Bremskraft erzeugbar ist. Darüber hinaus weist die Bremsanlage 16 drei Bremskreise einer mittels einer Bremspedaleinrichtung 18 betätigbaren Betriebsbremse auf. Die Erfindung ist jedoch nicht auf zweiachsige Fahrzeuge beschränkt und kann insbesondere auch bei Fahrzeugen mit mehr als zwei Achsen, insbesondere mehreren Hinterachsen und/oder mehreren Vorderachsen eingesetzt werden. Unter einem Fahrzeug ist dabei u. a. auch ein Zugfahrzeug oder auch ein Fahrzeug ohne Zugfunktion, z.B. ein Bus, zu verstehen.

Ein Fahrzeug weist ein Tragwerk und eine Kabine mit einem Fahrersitz auf. Neben dem Fahrersitz kann die Kabine noch weitere Sitze, bspw. einen Beifahrersitz oder bei einem Bus eine Vielzahl von Sitzen für Fahrgäste, aufweisen. Das Tragwerk kann bei einem Lastkraftwagen aus einem Leiterrahmen gebildet sein. Busse weisen als Tragwerk vorzugsweise eine selbsttragende Karosserie auf, können jedoch ebenfalls einen Rahmen zur Aufnahme der Kabine aufweisen.

Die Bremspedaleinrichtung 18 ist in der Kabine in der Nähe des Fahrersitzes angeordnet, so dass sie von einem Fahrer mit dem Fuß bedient werden kann. Die Steuereinrichtung 17 ist erfindungsgemäß außerhalb der Kabine an dem Tragwerk, insbesondere dem Leiterrahmen, angeordnet. Die Steuereinrichtung 17 befindet sich somit nicht in dem für den Fahrer und ggf. Fahrgäste vorgesehenen Innenraum des Fahrzeugs 10. Die Steuereinrichtung 17 weist ein erstes Modul 19 auf, welches an dem Tragwerk befestigt, bspw. angeschraubt, oder in irgendeiner anderen Weise außerhalb der Kabine unmittelbar oder mittelbar an dem Tragwerk angeordnet sein kann. Dieses erste Modul 19 ist in diesem Ausführungsbeispiel ein Hinterachsmodul.

Das Ausführungsbeispiel gemäß Fig. 1 zeigt eine druckluftbetriebene Bremsanlage 16 mit drei Betriebsbremskreisen. Ein erster Betriebsbremskreis dient zum Bremsen von Rädern 20 einer Vorderachse 12. Dieser erste Betriebsbremskreis weist einen Druckluftvorratsbehälter 22 auf, der mit einem zweiten Modul 24 über eine Druckluftleitung 26 verbunden ist. Dieses zweite Modul 24 ist in diesem Ausführungsbeispiel ein Vorderachsmodul. Ferner umfasst der erste Betriebsbremskreis für jedes der Räder 20 jeweils eine Ventileinheit 28, über die Druckluft zu Bremszylindern 30 von Bremsen an den Rädern 20 zu- bzw. abgeführt werden kann. Die Ventileinheiten 28 stehen daher über Druckluftleitungen 32 mit dem Vorderachsmodul 24 und über Druckluftleitungen 34 mit den Bremszylindern 30 in Verbindung. Das Vorderachsmodul 24 weist ein oder mehrere Magnetventile auf, mittels derer die Druckluftleitungen 32 belüftet und entlüftet werden können und mittels derer ggf. ein pneumatischer Druck in den Druckluftleitungen 32 gehalten werden kann.

Die Ventileinheiten 28 sind ferner über elektrische Leitungen 36 mit dem Hinterachsmodul 19 verbunden, um von diesem Steuersignale zum Betätigen der Ventileinhalten 28 zu erhalten. Vorteilhafterweise können die beiden Ventileinheiten 28 auch in das Vorderachsmodul 24 integriert werden.

An den Rädern 20 sind ferner Radgeschwindigkeitssensiermittel 38 vorgesehen, welche über elektrische Leitungen 40 mit dem Hinterachsmodul 19 verbunden sind. Die Radgeschwindigkeitssensiermittel 38 dienen zur Ermittlung der jeweiligen Raddrehgeschwindigkeit. Sie bestehen jeweils aus einem mit dem jeweiligen Rad 20 drehfest verbundenen Polrad 42, welches mit einem aktiv oder passiv arbeitenden Rad-Sensor 44 elektromagnetisch gekoppelt ist. Mittels der Radgeschwindigkeitssensiermittel 38 kann bspw. ein Blockieren oder ein Schlupf der Räder 20 festgestellt und über entsprechende Steuersignale vom Hinterachsmodul 19 an die Ventileinheiten 28 der Bremsdruck zu den Bremszylindern 30 nachgeregelt, insbesondere bei einer Blockierneigung eines Rades 20 reduziert werden. Auf diese Weise wird eine Antiblockierfunktion für die Räder 20 bereitgestellt.

Das Vorderachsmodul 24 ist ferner über eine Druckluftleitung 46 mit der Bremspedaleinrichtung 18 verbunden. Diese Druckluftleitung 46 führt einen pneumatisch ausgesteuerten Druck als Redundanzdruck von der Bremspedaleinrichtung 18 an das Vorderachsmodul 24. Druckluft wird der Bremspedaleinrichtung 18 hierfür über eine Druckluftleitung 46A aus dem Druckluftvorratsbehälter 22 bereitgestellt. Schließlich kann das Vorderachsmodul 24 einen Anschluss 47 für eine elektrische Energieversorgung aufweisen.

Ein zweiter Bremskreis weist einen zweiten Druckluftvorratsbehälter 48 auf, der über eine Druckluftleitung 50 mit dem Hinterachsmodul 19 und über eine Druckluftleitung 52 mit der Bremspedaleinrichtung 18 pneumatisch verbunden ist. Ein mittels der Bremspedaleinrichtung 18 ausgesteuerter Druck gelangt über eine Druckluftleitung 53 als Redundanzdruck bei einem Ausfall der Elektronik an das erste Modul 19. Dieser zweite Bremskreis umfasst ferner Bremszylinder 54, wobei jeder der Bremszylinder jeweils einem Rad 56 der Hinterachse 14 zugeordnet ist. Die Bremszylinder 54 sind über Druckluftleitungen 58 mit dem Hinterachsmodul 19 verbunden. Innerhalb des Hinterachsmoduls 19 sind ein bzw. mehrere Ventile zur Bremsdruckzumessung für die Bremszylinder 54 vorgesehen. Das Ventil bzw. die Ventile sind ein oder mehrere Magnetventile, mittels derer die Druckluftleitungen 58 belüftet und entlüftet werden können und mittels derer ggf. ein pneumatischer Druck in den Druckluftleitungen 58 gehalten werden kann.

Das Hinterachsmodul 19 weist einen Anschluss 58A für eine elektrische Energieversorgung auf. Das Hinterachsmodul 19 ist ferner über eine elektrische Leitung 59 mit dem Vorderachsmodul 24 verbunden. Über diese elektrische Leitung 59 sendet das Hinterachsmodul 19 Steuersignale an das Vorderachsmodul 24 zur Steuerung von ein oder mehreren Ventilen zur Bremsdruckzumessung für die Bremszylinder 30. Das Hinterachsmodul 19 weist somit neben der Steuereinrichtung 17 auch eine Steuerungselektronik bzw. Steuerungslogik 59A für die Bemessung des Bremsdrucks für die Bremsen an der Vorderachse 12 sowie eine Steuerungslogik 59B für die Bemessung des Bremsdrucks an der Hinterachse 14 auf. Die Steuerungslogiken 59A und 59B werden über Bremskraftsteuersignale von der Steuereinrichtung angesteuert und weisen Leistungselektronikkomponenten zur Bereitstellung von elektrischer Leistung für die Betätigung von Bremskomponenten, wie Elektromagnetventile oder elektromechanische Aktuatoren, auf.

An den Rädern 56 der Hinterachse 14 sind ebenfalls Radgeschwindigkeitsensiermittel 60 vorgesehen, welche eine Ermittelung der jeweiligen Raddrehgeschwindigkeit erlauben. Wiederum bestehen die Radgeschwindigkeitssensiermittel 60 jeweils aus einem mit dem Rad 56 drehfest verbundenen Polrad 62, das mit einem aktiv oder passiv (induktiv) arbeitenden Radsensor 64 elektromagnetisch gekoppelt ist. Die Radgeschwindigkeitssensiermittel 60, insbesondere die Radsensoren 64, sind über elektrische Leitungen 66 mit dem Hinterachsmodul 19 verbunden. Mittels der Radgeschwindigkeitssensiermittel 60 kann ein Blockieren bzw. ein Schlupf der Räder 56 der Hinterachse 14 festgestellt und entsprechend die Bremsdruckzumessung zu den Bremszylindern 64 variiert werden, um einer Blockierneigung der Räder 56 bzw. einem erhöhten Schlupf dieser Räder 56 entgegenzuwirken.

Das Hinterachsmodul 19 ist ferner über eine elektrische Leitung 68 mit der Bremspedaleinrichtung 18 verbunden und empfängt über diese elektrische Leitung 68 ein elektrisches Bremsanforderungssignal von einem Bremswertgeber 69 der Bremspedaleinrichtung 18. Unter Berücksichtigung des elektrischen Bremsanforderungssignals bemisst das Hinterachsmodul 19 - ebenso wie das Vorderachsmodul 24 - den den Bremszylindern 54 bzw. 30 zuzuführenden Bremsdruck.

Das Hinterachsmodul 19 ist ferner mit einer elektrischen Leitung 70 mit einem Anhängersteuerventil 72 eines dritten Bremskreises verbunden. Dieser dritte Bremskreis weist einen dritten Druckluftvorratsbehälter 74 auf, der über eine Druckluftleitung 76 mit dem Anhängersteuerventil 72 verbunden ist. Das Anhängersteuerventil 72 dient zur Bremsdrucksteuerung eines ankoppelbaren Anhängefahrzeugs (nicht dargestellt). Das Anhängersteuerventil 72 gibt die von dem Druckluftvorratsbehälter 74 bezogene Druckluft nach Maßgabe elektrischer Steuersignale oder eines pneumatischen Drucks, insbesondere der über die elektrische Leitung 70 vom Hinterachsmodul 19 erhaltenen elektrischen Steuersignale oder des über eine Druckluftleitung 77 von der Bremspedaleinrichtung 18 zugeleiteten pneumatischen Drucks, über Druckluftanschlüsse 78, 80 an eine Bremsanlage eines ankoppelbaren Anhängerfahrzeuges ab. Indirekt erhält somit das Anhängersteuerventil 72 über das Hinterachsmodul 19 ein elektrisches Signal, z.B. ein pulsbreitenmoduliertes Signal, das den Bremswunsch des Fahrers repräsentiert, und einen direkt mittels der Bremspedaleinrichtung 18 ausgesteuerten redundanten pneumatischen Druck bzw. pneumatischen Redundanzdruck.

Ferner ist ein elektrischer Steckanschluss 82 zur Stromversorgung und Übermittelung von Daten zum und vom Anhängerfahrzeug vorgesehen. Der elektrische Steckanschluss 82 ist über eine elektrische Leitung 84 mit der Bremspedaleinrichtung 18 verbunden.

Die Bremspedaleinrichtung 18 ist ferner mit einem Rollbremssignalgeber 85 verbunden, über den eine Rollbremsfunktion aktiviert bzw. deaktiviert werden kann. Diese Rollbremsfunktion ist bspw. derart ausgestaltet, dass nach Aktivierung der Rollbremsfunktion bei fahrendem Fahrzeug eine Überwachung darauf stattfindet, ob das Fahrzeug zum Stillstand kommt. Bei Erkennen des Fahrzeugstillstandes infolge einer Bremsbetätigung durch den Fahrer werden dann automatisch durch Betätigung der Ventileinheiten 28 sowie der in dem Hinterachsmodul 19 vorgesehenen Ventile die jeweils vorliegenden oder vorbestimmten Bremsdrücke in den Bremszylindern 30, 54 sowie in der Anhängerbremsanlage auf dem aktuell vorliegenden bzw. einem vorbestimmten Niveau gehalten, ohne dass der Fahrer weiterhin das Bremspedal betätigen muss. Hierdurch kann das Fahrzeug auch nach dem Lösen des Bremspedals an einer geneigten Fahrbahn im Stillstand gehalten werden. Sobald erkannt wird, dass der Fahrer versucht, mit dem Fahrzeug anzufahren, werden die Radbremsen sowie die Anhängerbremsanlage automatisch gelöst.

Die Radgeschwindigkeitssensiermittel 38, 60 können darüber hinaus dazu verwendet werden, um zu erkennen, ob das Fahrzeug bei aktivierter Rollbremse und zunächst erreichtem Fahrzeugstillstand zu rollen beginnt. Falls dies der Fall sein sollte, wird die Bremskraft erhöht, indem die Bremszylinder 30, 54 und/oder ggf. vorhandene elektromechanische Stellorgane größere Zuspannkräfte für die Radbremsen zur Verfügung stellen.

Die Bremspedaleinrichtung 18, das Vorderachsmodul 24 sowie das Hinterachsmodul 19 sind direkt oder indirekt mit einer oder mehreren elektrischen Energieversorgung(en) (nicht dargestellt) verbunden. Vorteilhafterweise ist die Bremspedaleinrichtung 18 über einen Anschluss 86 mit einer ersten elektrischen Energieversorgung eines ersten, auch das Vorderachsmodul 24 über dessen Anschluss 47 sowie das Hinterachsmodul 19 über dessen Anschluss 58A versorgenden Stromkreises verbunden. Die Bremspedaleinrichtung 18 ist vorteilhafterweise ferner über einen Anschluss 87 mit einer zweiten elektrischen Energieversorgung eines zweiten, ggf. auch eine Feststellbremssteuereinheit versorgenden Stromkreis verbunden. Die Bremspedaleinrichtung 18 ist somit vorteilhafterweise mit beiden Stromkreisen verbunden. Die Bremspedaleinrichtung 18 weist somit vorteilhafterweise eine mindestens zweifache Energieversorgung auf, um auch im einfachen Fehlerfall noch die Funktion der Bremspedaleinrichtung 18 sicherzustellen.

Die o. g. elektrische Leitung 68, welche das Hinterachsmodul 19 mit der Bremspedaleinrichtung 18 verbindet, ist als primäre Kommunikationsleitung vorgesehen. Die Bremspedaleinrichtung 18 weist ferner einen Anschluss 88 für einen Datenbus, insbesondere für einen CAN-Bus auf. Dieser Datenbus verbindet die Bremspedaleinrichtung 18 über einen (nicht dargestellten) Eingang mit dem Hinterachsmodul 19. Der Datenbus dient vorteilhafterweise als sekundäre bzw. redundante Kommunikationsleitung zwischen Bremspedaleinrichtung 18 und Hinterachsmodul 19. Vorteilhafterweise sind daher statt nur eines Anschlusses 88 aus Redundanzgründen mindestens zwei Datenverbindungen zu Einrichtungen der Bremsanlage, insbesondere zur Steuereinrichtung 17, vorgesehen.

Ebenfalls aus Redundanzgründen weist die Bremspedaleinrichtung 18 vorteilhafterweise mindestens zwei Sensoren zur Erfassung des als elektrisches Bremsanforderungssignal ausgegebenen Sollwertes der Bremsanforderung, z.B. der Verzögerungsanforderung, auf.

Ferner weist die Bremspedaleinrichtung 18 einen Diagnoseanschluss 90 auf, der eine Schnittstelle bildet, insbesondere für den Anschluss eines Wartungsrechners zur Wartung und Fehleranalyse.

Vorteilhafterweise kann die Bremspedaleinrichtung 18 eines, mehrere oder alle der genannten und folgenden Merkmale aufweisen: Die Bremspedaleinrichtung 18 weist eine Steuerungseinrichtung sowie einen oder mehrere Anschlüsse zur Ansteuerung von Bremslichtern des Fahrzeuges auf. Ferner weist die Bremspedaleinrichtung 18 Mittel, insbesondere Sensoren, bzw. Anschlüsse für derartige Mittel zum Auslesen von ggf. nur optional vorhandenen Bedienelementen der Bremsanlage in der Kabine des Fahrzeuges, insbesondere in seinem Fahrerhaus oder Cockpit, auf. Ferner weist die Bremspedaleinrichtung 18 Anschlüsse zur Ansteuerung optischer und/oder akustischer Signale der Bremsanlage in der Kabine, insbesondere im Fahrerhaus oder Cockpit, oder außerhalb des Fahrzeuges auf.

Ferner weist die Bremspedaleinrichtung 18 vorteilhafterweise wenigstens einen Anschluss für eine elektrische Verbindung zur Steuerung der Antriebseinheit des Fahrzeuges zur Einleitung einer unterstützenden Motorbremse auf. D.h. mittels der Bremspedaleinrichtung 18 kann ein Signal erzeugt werden, das eine unterstützende Motorbremse einleitet bzw. steuert.

Die Bremspedaleinrichtung 18 weist ferner vorteilhafterweise einen Anschluss für eine elektrische Verbindung zu einem Retarder zur Erzeugung einer Bremswirkung mittels des Retarders auf. D.h. die Bremspedaleinrichtung 18 kann ein elektrisches Signal zur Steuerung der Retarderbremse erzeugen.

Ferner weist die Bremspedaleinrichtung 18 vorteilhafterweise wenigstens einen Anschluss für eine elektrische Verbindung zu elektromotorischen Komponenten im Antriebsstrang des Fahrzeuges auf, wie bspw. zu einer Starter-Generatoreinheit, einer Hybrid-Einheit oder ähnliches, mittels der bzw. denen eine weitere unterstützende Bremswirkung erzielbar ist. D.h. die Bremspedaleinrichtung 18 erzeugt wenigstens ein elektrisches Signal zur Ansteuerung derartiger elektromotorischer Komponenten zur Erzeugung weiterer Bremswirkungen.

In einer nicht dargestellten Ausführung ist die Steuerungselektronik bzw. Steuerungslogik zur Steuerung der Bremsen an der Vorderachse 12 und/oder zur Steuerung der Bremsen der Hinterachse 14 in die Bremspedaleinrichtung 18 integriert, so dass die entsprechende Elektronik bzw. Logik in einem Modul entfällt. Die elektropneumatischen Ventile des Vorderachsmoduls 24 bzw. des Hinterachsmoduls 19 sind in diesem Fall von der Bremspedaleinrichtung 18 ansteuerbar.

Insgesamt bildet die Bremspedaleinrichtung 18 somit eine Schnittstelle zwischen dem Fahrer, der Bremsanlage 16 und dem restlichen Fahrzeug.

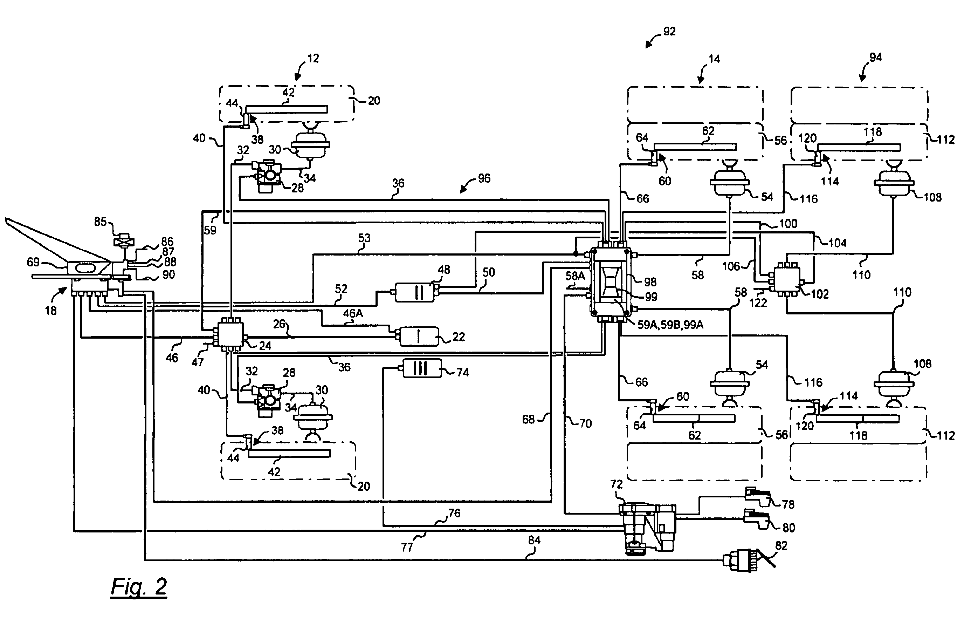

Fig. 2 zeigt schematisch ein dreiachsiges Fahrzeug 92 ebenfalls mit einer Vorderachse 12 und einer Hinterachse 14 sowie einer ersten Zusatzachse 94 als zweite Hinterachse sowie einer Bremsanlage 96 mit drei Bremskreisen einer mittels der Bremspedaleinrichtung 18 betätigbaren Betriebsbremse. Das zweite Ausführungsbeispiel gleicht in wesentlichen Teilen dem ersten Ausführungsbeispiel. Insbesondere bezeichnen gleiche Bezugsziffern gleiche Teile.

Ein erstes Modul 98 gleicht in seiner Funktionalität in Bezug auf die Bremsen der Vorderachse 12 und der Hinterachse 14 dem Hinterachsmodul 19 des ersten Ausführungsbeispiels gemäß Fig. 1. Eine Steuereinrichtung 99 in dem ersten Modul 98 erzeugt jedoch zusätzlich ein Bremskraftsteuersignal für Bremsen der ersten Zusatzachse 94 und steuert mittels einer Steuerungslogik 99A in Abhängigkeit von dem Bremskraftsteuersignal über eine elektrische Leitung 100 ein oder mehrere Ventile in einem zweiten Modul 102 zur Aussteuerung von Druckluft an. Das zweite Modul 102 ist ferner über eine Druckluftleitung 104 mit dem Druckluftvorratsbehälter 48 und über eine Druckluftleitung 106 mit der Druckluftleitung 53 und darüber mit der Bremspedaleinrichtung 18 verbunden. Über die Druckluftleitung 104 bereitgestellte und ausgesteuerte Druckluft wird Bremszylindern 108 über Druckluftleitungen 110 bereitgestellt. Eine pneumatische Redundanz bei einem Ausfall der Elektrik wird über die Druckluftleitung 106 sichergestellt.

An Rädern 112 der ersten Zusatzachse 94 sind ferner Radgeschwindigkeitssensiermittel 114 vorgesehen, welche über elektrische Leitungen 116 mit dem ersten Modul 98 verbunden sind. Zur Ermittlung der Raddrehgeschwindigkeiten der Räder 112 weist jedes Rad 112 zudem ein drehfest verbundenes Polrad 118 auf, welches mit einem aktiv oder passiv arbeitenden Rad-Sensor 120 elektromagnetisch gekoppelt ist. Das erste Modul 98 kann mittels der Radgeschwindigkeitssensiermittel 114 ein Blockieren oder einen erhöhten Schlupf der Räder 112 feststellen, in Erwiderung hierauf Steuersignale an das zweite Modul 102 senden und über das bzw. die Ventile in dem zweiten Modul 102 den Druck in den Druckluftleitungen 110 reduzieren und somit die Bremskräfte an den Rädern 112 vermindern. Auf diese Weise wird ein Antiblockierfunktion für die Räder 112 bereitgestellt.

Zur Versorgung mit elektrischer Energie weist das zweite Modul 102 einen Anschluss 122 für eine Verbindung mit einer elektrischen Energieversorgung auf.

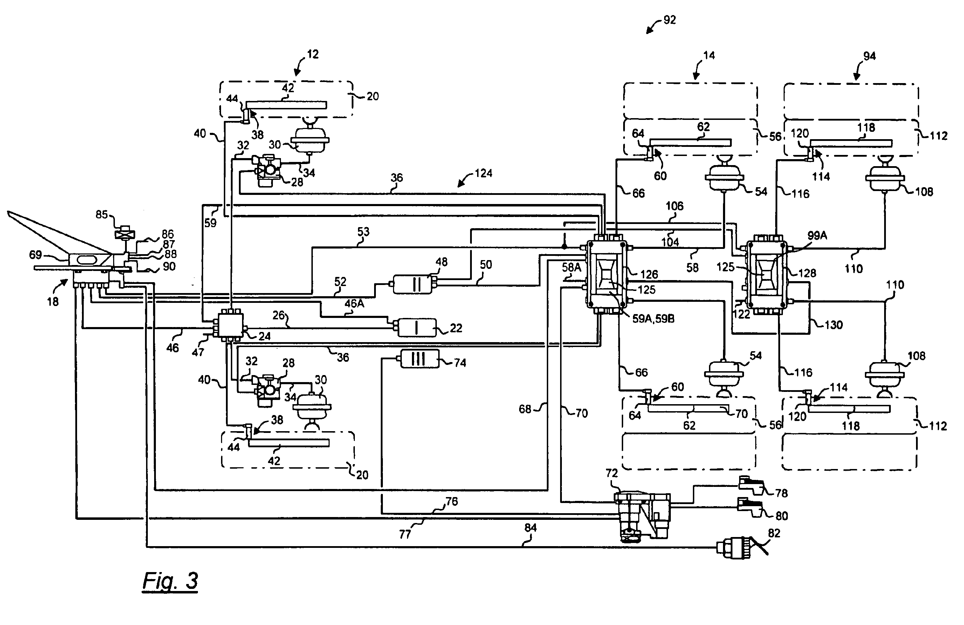

Fig. 3 zeigt schematisch das dreiachsige Fahrzeug 92 von Fig. 2 mit einer Bremsanlage 124 gemäß einem dritten Ausführungsbeispiel der Erfindung. Die Bremsanlage 124 gleicht im Wesentlichen der Bremsanlage 96 des zweiten Ausführungsbeispiels. Insbesondere bezeichnen gleiche Bezugsziffern wieder gleiche Teile. Die Bremsanlage 124 weist jedoch nun eine Steuereinrichtung 125 auf, die in ein als Hinterachsmodul ausgebildetes erstes Modul 126 und ein als erste Zusatzachsmodul ausgebildetes weiteres erstes Modul 128 integriert ist. Das Hinterachsmodul 126 gleicht hierbei dem Hinterachsmodul 19 des ersten Ausführungsbeispiels. Es weist jedoch zusätzlich einen Anschluss für eine Datenverbindung 130 auf, welche einen Datenaustausch mit dem Zusatzachsmodul 128 erlaubt. Insbesondere ein Bremsanforderungssignal wird über diese Datenleitung 130 an das Zusatzachsmodul 128 weitergeleitet. Aber auch weitere Informationen über den Bremsvorgang, bspw. für einen Bremseingriff einer Fahrdynamikregelung können über diese Datenleitung 130 ausgetauscht werden. Die Bremsen an der Zusatzachse 94 werden von dem Zusatzachsmodul 128 analog zu den Bremsen der Hinterachse 14 vom Hinterachsmodul 126 gesteuert. Insbesondere erfolgt die Berechnung von Bremsdrücken und die Steuerung eines Eingriffs des Antiblockiersystems im Unterschied zum zweiten Ausführungsbeispiel an dem Zusatzachsmodul 128. Deshalb verbinden die elektrischen Leitungen 116 nunmehr die Radsensoren 120 mit dem Zusatzachsmodul 128. Das Hinterachsmodul 126 unterscheidet sich im Wesentlichen dadurch vom Zusatzachsmodul 128, dass es zusätzlich zur Steuerung von Bremsen einer Achse 14 bzw. 94 noch das Ventil bzw. die Ventile in dem Vorderachsmodul 24 steuert und das Anhängersteuerventil 72 ansteuert. Die Steuerungslogik 99A für die Zusatzachse 94 ist in dem Zusatzachsmodul 128 angeordnet.

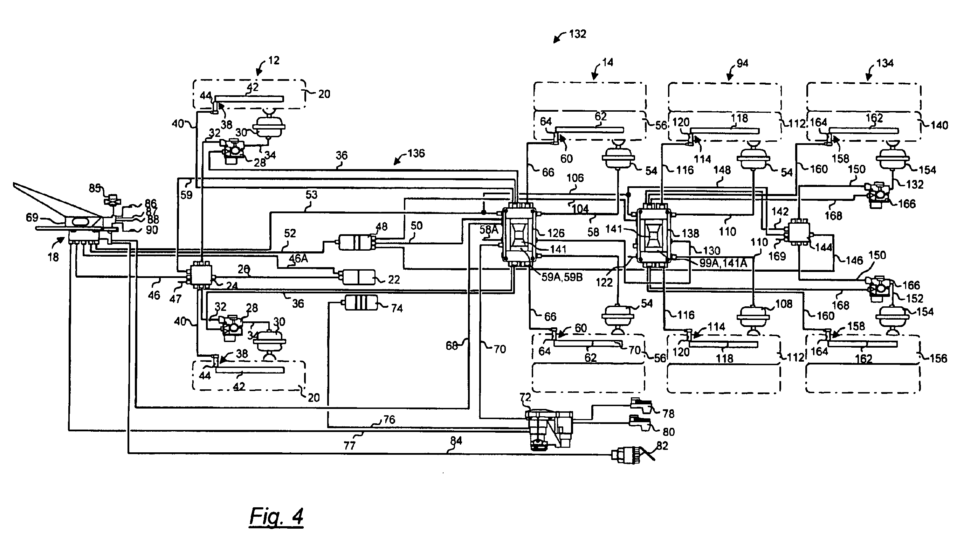

Fig. 4 zeigt schematisch ein vierachsiges Fahrzeug 132 mit der Vorderachse 12, der Hinterachse 14, der ersten Zusatzachse 94 und einer zweiten Zusatzachse 134, welche eine dritte Hinterachse ist, sowie eine Bremsanlage 136. Diese Bremsanlage 136 gleicht in Bezug auf die Betriebsbremsfunktion für die Räder 20, 56 und 112 an den Achsen 12, 14 und 94 im Wesentlichen der Bremsanlage 124 des dritten Ausführungsbeispiels gemäß Fig. 3. Anstelle des ersten Zusatzachsmoduls 128 ist jedoch nun ein erstes Modul 138 als erstes Zusatzachsmodul bzw. zweites Hinterachsmodul verbaut, welches zusätzlich Bremsen an Rädern 140 der zweiten Zusatzachse 134 steuert. Eine Steuereinrichtung 141 ist in den beiden ersten Modulen 126 und 138 integriert. Die Steuerung von Bremsen durch das erste Zusatzachsmodul 138 erfolgt analog zu der Steuerung der Bremsen an der Vorderachse 12 durch das Hinterachsmodul 126. Das Hinterachsmodul 126 unterscheidet sich insbesondere dadurch vom ersten Zusatzachsmodul 138, dass es zusätzlich noch zur Ansteuerung des Anhängersteuerventils 72 ausgebildet ist. Das erste Zusatzachsmodul 138 weist die Steuerungslogik 99A für die Bremsen der ersten Zusatzachse 94 und eine Steuerungslogik 141A für die Bremsen der zweiten Zusatzachse 134 auf.

Das erste Zusatzachsmodul 138 steuert über eine elektrische Leitung 142 ein zweites Modul 144 als zweites Zusatzachsmodul bzw. drittes Hinterachsmodul an. Insbesondere steuert es ein oder mehrere Ventile in dem zweiten Zusatzachsmodul 144. Weitere Anschlüsse verbinden das zweite Zusatzachsmodul 144 über eine Druckluftleitung 146 mit dem Druckluftvorratsbehälter 48 und über eine Druckluftleitung 148 mittelbar über die Druckluftleitungen 106 und 53 mit der Bremspedaleinrichtung 18. Somit ist ein Druck in Druckluftleitungen 150 und 152 zu Bremszylindern 154 sowohl elektropneumatisch mittels des bzw. der Ventile in dem zweiten Zusatzachsmodul 144 oder pneumatisch mittels der Bremspedaleinrichtung 18 über die Druckluftleitungen 53, 106 und 148 aussteuerbar.

An den Rädern 140 der zweiten Zusatzachse 134 sind wiederum Radgeschwindigkeitssensiermiftel 158 vorgesehen, welche über elektrische Leitungen 160 mit dem ersten Zusatzachsmodul 138 verbunden sind. Die Radgeschwindigkeitssensiermittel 158 weisen jeweils ein mit dem jeweiligen Rad 140 drehfest verbundenes Polrad 162 auf, welches mit einem aktiv oder passiv arbeitenden Rad-Sensor 164 elektromagnetisch gekoppelt ist. Ein Blockieren bzw. erhöhter Schlupf der Räder 140 kann somit von dem ersten Zusatzachsmodul 138 erkannt werden. In Erwiderung auf ein erkanntes Blockieren oder einen erhöhten Schlupf der Räder 140 sind Ventileinheiten 166 über elektrische Leitungen 168 ansteuerbar, mittels derer die Druckluftleitungen 132 zumindest teilweise entlüftet und damit die Bremskräfte an den Rädern 140 reduziert werden können.

Das zweite Zusatzachsmodul 144 kann ferner einen Anschluss 169 für elektrische Energieversorgung aufweisen.

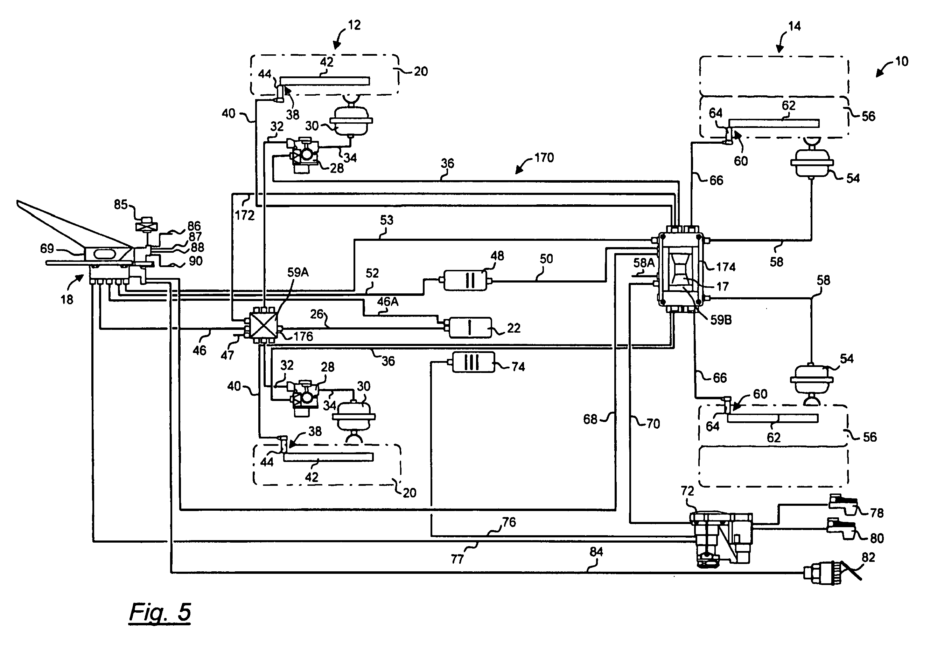

Fig. 5 zeigt schematisch das zweiachsige Fahrzeug 10 von Fig. 1 mit der Vorderachse 12 und der Hinterachse 14 sowie einer Bremsanlage 170, welche im Wesentlichen der Bremsanlage 16 des ersten Ausführungsbeispiels gleicht. Wiederum bezeichnen gleiche Bezugsziffern gleiche Teile.

Im Unterschied zum ersten Ausführungsbeispiel gemäß Fig. 1 ist jedoch anstelle der elektrischen Leitung 59 zwischen dem ersten Modul 19 und dem zweiten Modul 24 eine Datenleitung 172 zwischen einem ersten Modul 174 und einem zweiten Modul 176 vorgesehen. Im Vergleich zum ersten Ausführungsbeispiel ist zusätzliche Intelligenz, nämlich die Steuerungslogik 59A, von dem ersten Modul 174 auf das zweite Modul 176 verlagert. Das bzw. die Ventile in dem zweiten Modul 176 werden nunmehr nicht direkt vom zweiten Modul 176 aus angesteuert. Das zweite Modul 176 erhält nämlich nun Daten über die Datenleitung 172, anhand derer es selbstständig das bzw. die Ventile in dem zweiten Modul 176 steuert. Die Berechnung der Bremsdrücke und Erzeugung des Bremskraftsignals erfolgt weiterhin in dem ersten Modul 174 durch die dort angeordnete Steuereinrichtung 17.

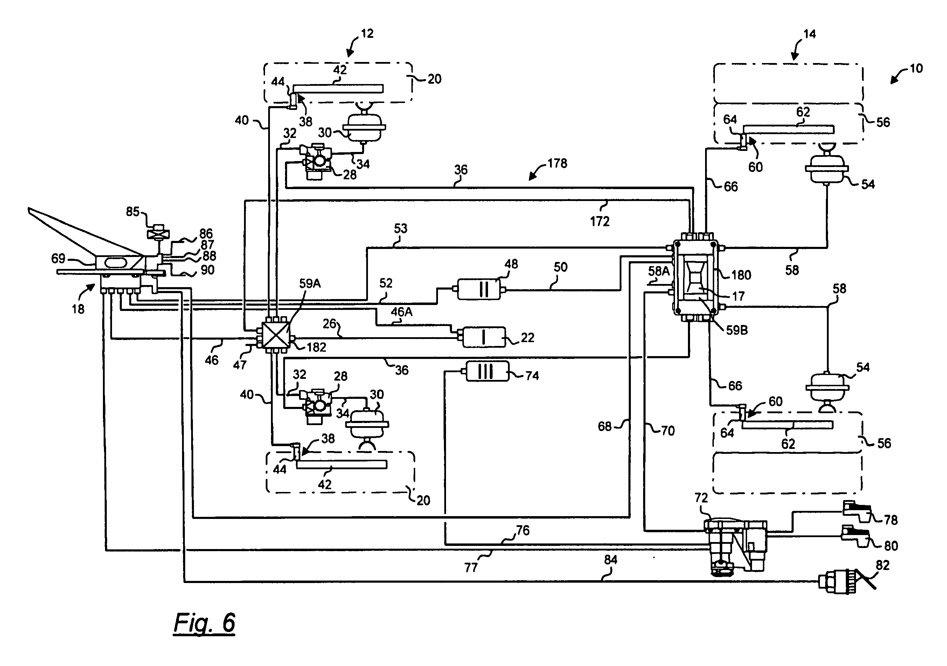

Fig. 6 zeigt schematisch das zweiachsige Fahrzeug 10 mit der Vorderachse 12 und der Hinterachse 14 des fünften Ausführungsbeispiels gemäß Fig. 5 sowie einer Bremsanlage 178, welche sich lediglich geringfügig von der Bremsanlage 170 gemäß Fig. 5 unterscheidet. Gleiche Bezugsziffern bezeichnen wieder gleiche Teile.

Das erste Modul 180 ist im Gegensatz zu dem ersten Modul 174 von Fig. 5 nicht mit den Radgeschwindigkeitssensiermitteln 38 verbunden. Die elektrischen Leitungen 40 verbinden die Radgeschwindigkeitssensiermittel 38 nun mit dem zweiten Modul 182, welches über geeignete Anschlüsse hierfür verfügt. Daten der sensierten Radgeschwindigkeiten werden über die Datenleitung 172 an das erste Modul 180 übermittelt, welches über die elektrischen Leitungen 36 die Ventileinheiten 28 steuert.

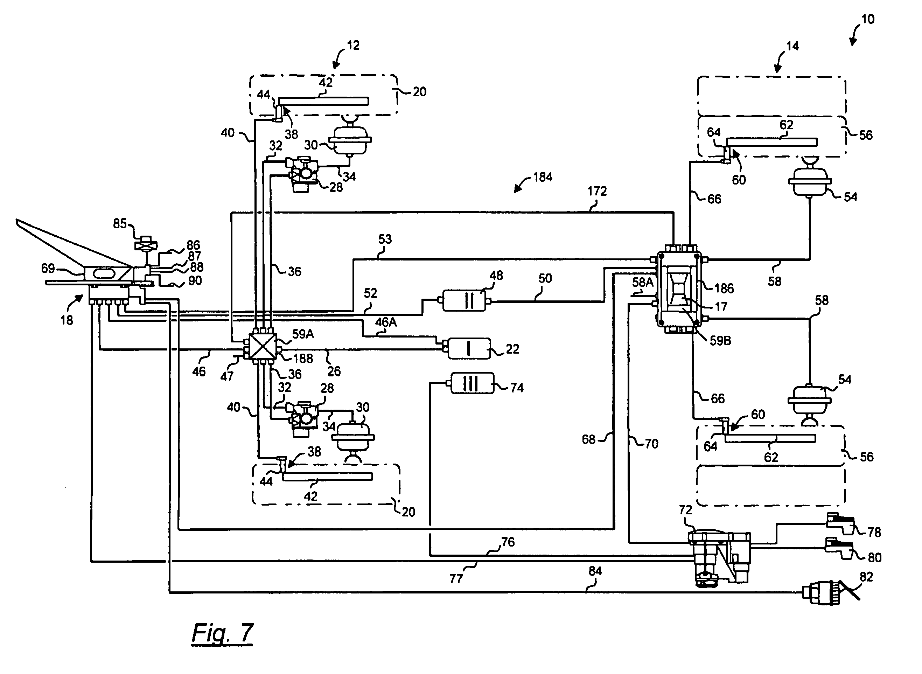

Fig. 7 zeigt schematisch das zweiachsige Fahrzeug 10 mit der Vorderachse 12 und der Hinterachse 14 des sechsten Ausführungsbeispiels sowie einer Bremsanlage 184, welche sich im Wesentlichen durch die Ansteuerung der Ventileinheiten 28 von der Bremsanlage 178 des sechsten Ausführungsbeispiels unterscheidet. Die Bremsanlage 184 weist ein erstes Modul 186 und ein zweites Modul 188 auf. Das zweite Modul 188 ist über die elektrischen Leitungen 36 mit den Ventileinheiten 28 verbunden und steuert diese Ventileinheiten 28. Die Bremsanlage 184 gleicht ansonsten der Bremsanlage 176 von Fig. 6. Gleiche Bezugsziffern bezeichnen hierbei gleiche Teile.

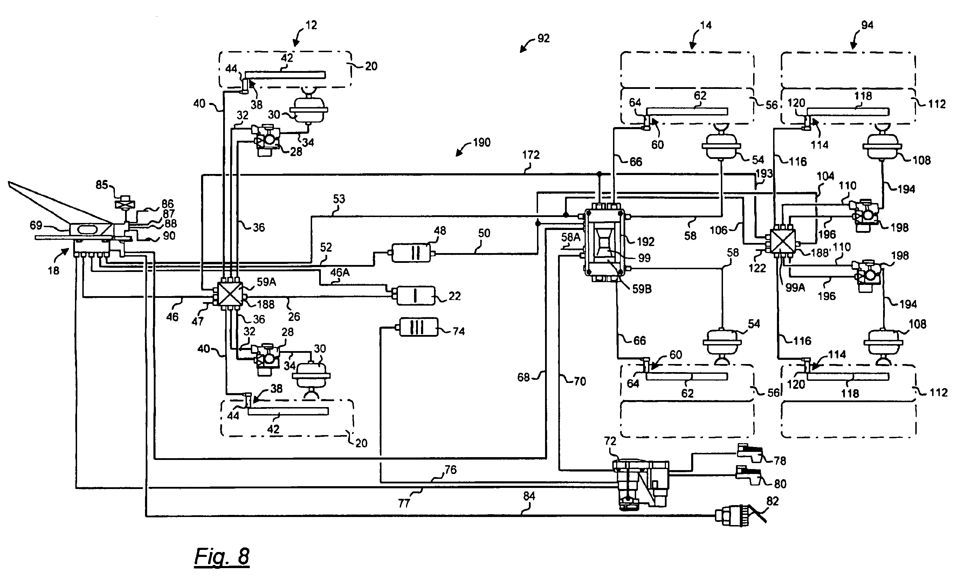

Fig. 8 zeigt schematisch das dreiachsige Fahrzeug 92 des zweiten Ausführungsbeispiels von Fig. 2 mit der Vorderachse 12, der Hinterachse 14 und der Zusatzachse 94 als zweiter Hinterachse sowie einer Bremsanlage 190. Gleiche Bezugsziffern bezeichnen gleiche Teile. Vereinfacht dargestellt werden die Bremsen der Zusatzachse 94 analog zu den Bremsen der Vorderachse 12 gesteuert. Hierfür ist ein zweites Modul 188' oder Zusatzachsmodul vorgesehen, welches wie das Vorderachsmodul bzw. zweite Modul 188 ausgebildet ist. Ein Hinterachsmodul bzw. erstes Modul 192 berechnet folglich Bremskräfte für Bremsen an allen drei Achsen 12, 14 und 94 und steuert bzw. regelt entsprechende Bremskräfte mittels zugehöriger Bremskraftsteuersignale. Das zweite Achsmodul 188' ist über eine Datenleitung 193 mit dem ersten Modul 192 verbunden. Über diese Datenleitung 193 empfängt das zweite Modul 188' Daten, anhand derer es ein oder mehrere Ventile in dem zweiten Modul 188' ansteuert. Ein ausgesteuerter Druck gelangt über die Druckluftleitungen 110 und Druckluftleitungen 194 an die Bremszylinder 108. Das zweite Modul 188 kann ein Blockieren bzw. einen erhöhten Schlupf der Räder 112 feststellen, in Erwiderung hierauf über elektrische Leitungen 196 Ventileinheiten 198 zwischen den Druckluftleitungen 110 und 194 zum zumindest teilweisen Entlüften der Druckluftleitungen 194 ansteuern.

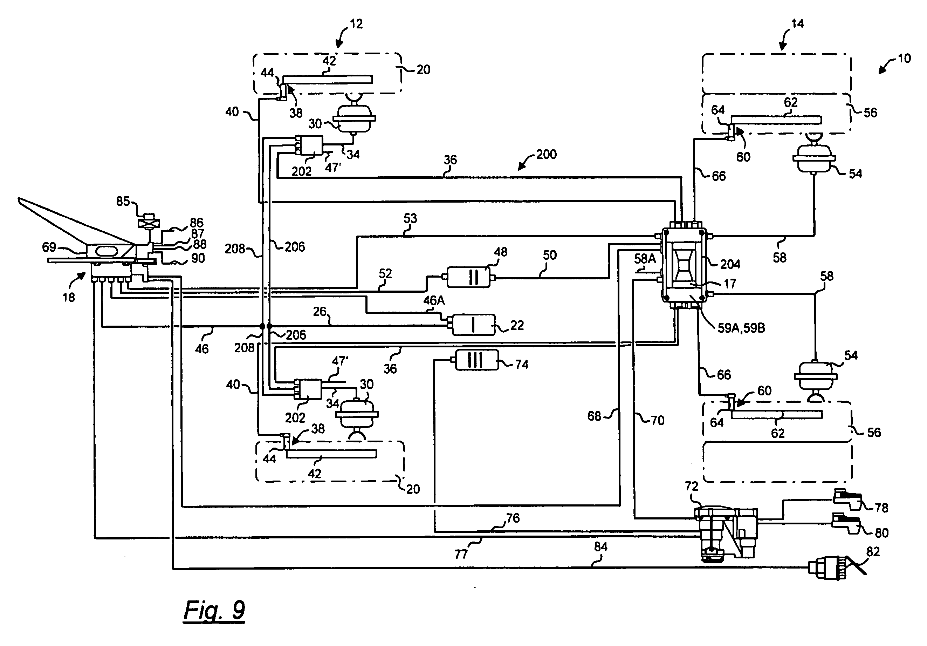

Fig. 9 zeigt schematisch das zweiachsige Fahrzeug 10 mit der Vorderachse 12 und der Hinterachse 14 sowie einer Bremsanlage 200 gemäß einem neunten Ausführungsbeispiel der Erfindung. Dieses Ausführungsbeispiel unterscheidet sich im Wesentlichen dadurch von dem ersten Ausführungsbeispiel gemäß Fig. 1, dass anstelle des zweiten Moduls 24 und der Ventileinheiten 28 zwei zweite Module 202 als Radmodule an den Rädern 20 der Vorderachse 12 vorgesehen sind. Gleiche Bezugsziffern bezeichnen gleiche Teile.

Ein erstes Modul 204 gleicht in seiner Funktion dem ersten Modul 19 von Fig. 1. Es entfällt jedoch die Notwendigkeit, neben den elektrischen Leitungen 36 weitere elektrische Leitungen für eine Signalübertragung zu den zweiten Modulen 202 vorzusehen. Elektrische Signale, welche im ersten Ausführungsbeispiel über die elektrischen Leitungen 36 und 59 transportiert wurden, können nun gemeinsam über die elektrischen Leitungen 36 an die zweiten Module 202 gelangen. Diese zweiten Module 202 sind über Druckluftleitungen 206 und die Druckluftleitung 26 mit dem Druckluftvorratsbehälter 22 verbunden. Ein pneumatisch ausgesteuerter Redundanzdruck wird den zweiten Modulen 202 über die Druckluftleitung 46 und Druckluftleitungen 208 zugeführt. Ein Ventil oder Ventile in den zweiten Modulen 202 werden direkt über die elektrischen Leitungen 36 von dem ersten Modul 204 gesteuert. Die zweiten Module 202 können ferner jeweils einen Anschluss 47' für elektrische Energieversorgung aufweisen. Die zweiten Module 202 verfügen jedoch über keine eigene Intelligenz, d.h. sie weisen keine eigene Steuerlogik auf.

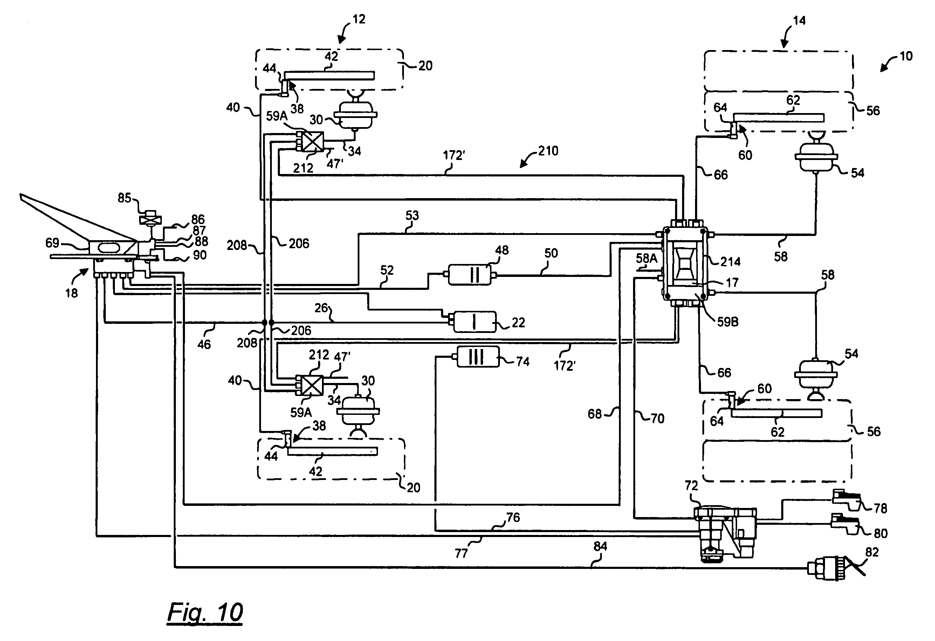

Fig. 10 zeigt schematisch das zweiachsige Fahrzeug 10 von Fig. 9 mit der Vorderachse 12 und der Hinterachse 14 sowie einer Bremsanlage 210 gemäß einem zehnten Ausführungsbeispiel der Erfindung. Gleiche Bezugsziffern bezeichnen gleiche Teile. Dieses zehnte Ausführungsbeispiel verhält sich in etwa so zu dem neunten Ausführungsbeispiel gemäß Fig. 9 wie das fünfte Ausführungsbeispiel gemäß Fig. 5 zu dem ersten Ausführungsbeispiel gemäß Fig. 1. Im Vergleich zu den zweiten Modulen 209 des neunten Ausführungsbeispiels weisen Radmodule bzw. zweite Module 212 zusätzliche Intelligenz derart auf, dass sie ein oder mehrere beinhaltete Ventile selbsttätig ansteuern können. Informationen für dieses Ansteuern erhalten die zweiten Module über Datenleitungen 172' von einem ersten Modul 214, welches in seiner Funktionalität dem ersten Modul 174 des fünften Ausführungsbeispiels gemäß Fig. 5 gleicht.

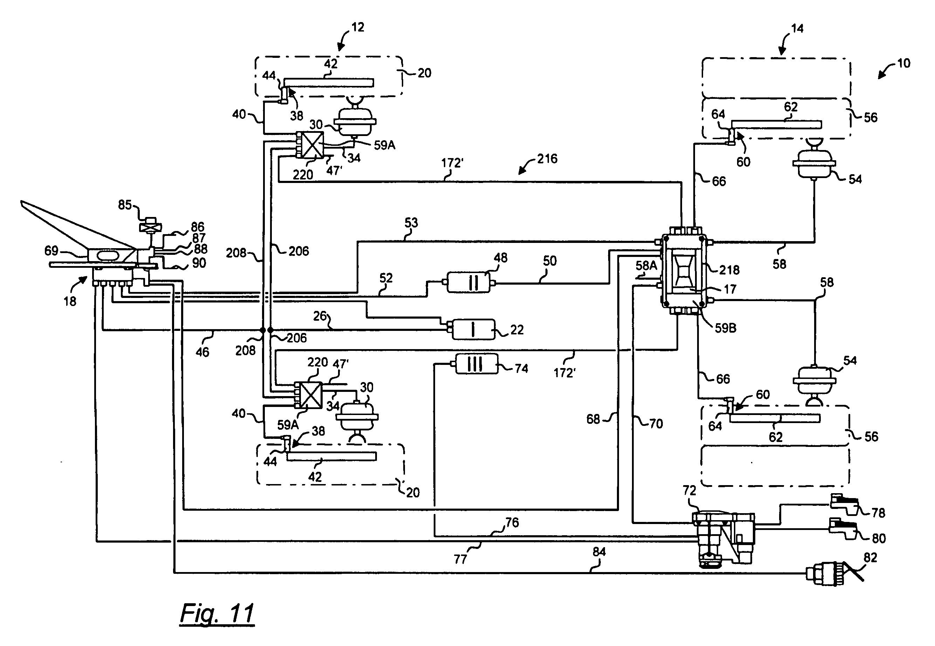

Fig. 11 zeigt schematisch das zweiachsige Fahrzeug 10 mit der Vorderachse 12 und der Hinterachse 14 sowie einer Bremsanlage 216 gemäß einem elften Ausführungsbeispiel der Erfindung. Dieses Ausführungsbeispiel gleicht im Wesentlichen dem zehnten Ausführungsbeispiel gemäß Fig. 10 und verhält sich zu jenem Ausführungsbeispiel wie das siebte Ausführungsbeispiel gemäß Fig. 7 zu dem fünften Ausführungsbeispiel gemäß Fig. 5. Dabei bezeichnen gleiche Bezugsziffern wieder gleiche Teile. Die Bremsanlage 216 weist ein erstes Modul 218 als Hinterachsmodul und zwei zweite Module 220 als Radmodule an den Rädern 20 der Vorderachse 12 auf. Diese zweiten Module 220 weisen eine Intelligenz auf, mittels welcher ein Blockieren oder einen erhöhten Schlupf der Räder 20 feststellbar und in Erwiderung hierauf die Druckluftleitungen 34 zumindest teilweise entlüftbar sind. Hierfür sind die Radgeschwindigkeitssensiermittel 38 über die elektrischen Leitungen 40 direkt mit den zweiten Modulen 220 verbunden. Die Steuereinrichtung 17 ist in dem ersten Modul 218 angeordnet. Die zweiten Module 220 verfügen jeweils über eine Steuerungslogik zur Ansteuerung eines oder mehrerer Ventile in den zweiten Modulen 220.

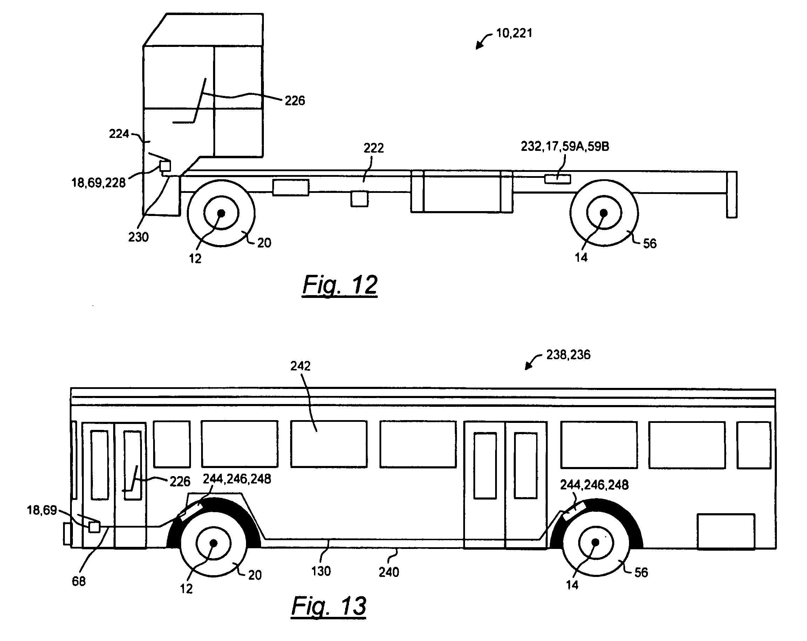

Fig. 12 zeigt das Fahrzeug 10 des ersten Ausführungsbeispiels, welches als Lastkraftwagen ausgebildet ist, mit einer erfindungsgemäßen Bremsanlage 221 in einer Seitenansicht in vereinfachter schematischer Darstellung. Das Fahrzeug 10 weist ein Tragwerk 222 und eine Kabine 224 auf. Die Kabine 224 ist als Frontlenkerfahrerhaus mit mechanischer oder hydraulischer Fahrerhaus-Kippeinrichtung ausgebildet und wird von dem Tragwerk 222 getragen. Dieses Tragwerk 222 ist als Leiterrahmen ausgebildet und kann neben dem Fahrerhaus bzw. der Kabine 224 Lasten, wie bspw. Container, tragen und transportieren. Das Tragwerk 222 bzw. der Leiterrahmen wird von den Rädern 20 der Vorderachse 12 und den Rädern 56 der Hinterachse 14 getragen.

Die Kabine 224 weist einen Fahrersitz 226 und die Bremspedaleinrichtung 18 mit dem Bremswertgeber 69 auf. In die Bremspedaleinrichtung 18 ist eine Schnittstelle 228 integriert. Ein mittels des Bremswertgebers 69 erzeugtes Bremsanforderungssignal wird an die Schnittstelle 228 und von dort über eine Datenbusverbindung 230 von der Bremspedaleinrichtung 18 in der Kabine 224 an die in ein Hinterachsmodul 232 integrierte Steuereinrichtung 17 geleitet. Die Steuereinrichtung 17 steuert bzw. regelt in Erwiderung auf das Bremsanforderungssignal sowohl für Bremsen an den Rädern 20 der Vorderachse 12 als auch für Bremsen an den Rädern 56 der Hinterachse 14 mittels zugehöriger Bremskraftsteuersignale entsprechende Bremskräfte.

Über die Schnittstelle 228 und die Datenbusverbindung 230 werden weitere Daten zwischen Einrichtungen in der Kabine und Einrichtungen am Tragwerk ausgetauscht. Bspw. kann ein Fahrer in der Kabine mittels einer Eingabevorrichtung ein Signal zum Einlegen einer Parkbremse erzeugen. Dieses Signal wird an die Schnittstelle 228 gesendet, welche entsprechende Daten über die Datenbusverbindung 230 an die Steuereinrichtung 17 übermittelt. Das Hinterachsmodul 232 weist neben der Steuereinrichtung 17 für die Betriebsbremse deshalb vorteilhafterweise auch einen Feststellbremsmodulator auf. Alternativ kann ein Feststellbremsmodulator jedoch auch eine separate Einheit bilden. Daten zur Steuerung einer Feststellbremsfunktion werden dann entweder von dem Hinterachsmodul 232 bzw. der Steuereinrichtung 17 an diese separate Einheit weitergeleitet oder auch schon vorher über eine Verzweigung bzw. einen Verteiler in der Datenbusverbindung 230 abgezweigt.

Über die Schnittstelle 228 und die Datenbusverbindung 230 können darüber hinaus bspw. auch an dem Tragwerk angeordnete Leuchten angesteuert werden. Diese Leuchten können Bremslichter, ein Fahrlicht oder auch Blinklichter sein. Über die Datenbusverbindung 230 kann somit jegliche Kommunikation zwischen Einrichtungen in oder an der Kabine 224 und Einrichtungen an dem Tragwerk 222 geführt werden.

Fig. 13 zeigt eine Bremsanlage 236 in einem Fahrzeug 238, welches als Omnibus ausgebildet ist, in einer Seitenansicht in vereinfachter Darstellung. Die Achsen 12 und 14 mit den Rädern 20 bzw. 56 tragen in diesem Fall eine selbsttragende Karosserie, welche ein Tragwerk 240 bildet. Das Fahrzeug 238 weist eine Kabine 242 auf, welche von dem Tragwerk 240 bzw. der Karosserie getragen und von dieser Karosserie eingefasst wird und einen Innenraum in der Karosserie bildet. Die Kabine 242 weist den Fahrersitz 226 und zahlreiche weitere Sitzplätze für Fahrgäste auf. Ein mittels des Bremswertgebers 69 der Bremspedaleinrichtung 18 erzeugtes Bremsanforderungssignal wird über die elektrische Leitung 68 Steuereinrichtungen 244 zugeleitet. Die Steuereinrichtungen 244 sind in vier Radmodule 246 integriert. Die Radmodule 246 sind gleichermaßen ausgebildet und prinzipiell gegeneinander austauschbar. Die vier Radmodule 246 sind über Datenleitungen 130 miteinander verbunden und tauschen über diese Datenleitungen 130 Daten zur Steuerung von Bremsen an den Rädern 20 und 56 aus. Die Radmodule 246 sind im Bereich der Räder 20 und 56 an Radkästen am Tragwerk 240 angeordnet, von wo aus sie leicht von außen für eventuelle Wartungs- und/oder Reparaturarbeiten zugänglich sind.

Jedes Radmodul 246 ist somit einem Rad 20 bzw. 56 zugeordnet, weist ein oder mehrere Ventile auf und steuert mittels dieses bzw. dieser Ventile einen Bremsdruck zur Betätigung einer Bremse des jeweiligen Rades 20 bzw. 56 aus. Die Steuereinrichtung 244 jedes Radmoduls 246 ist hingegen jeweils vierfach ausgebildet. Somit kann von jedem Radmodul 246 ein Bremskraftsteuersignal für eine Bremse an jedem der Räder 20 und 56 berechnet werden. Durch Vergleich der vier ermittelten Bremskraftsteuersignale können selbsttätig eventuelle Fehlfunktionen in der Steuereinrichtung erkannt und Auswirkungen einer fehlerhaften Steuereinrichtung auf das Bremsverhalten vermieden werden. Das bzw. die Ventile an einem Radmodul 246 werden nämlich von Steuerungslogiken 248 gesteuert, welchen Bremskraftsteuersignale von einer Steuereinrichtung 244 zugeleitet werden, die als funktionsfähig erkannt ist. Alternativ können die Steuerungslogiken auch vierfach redundant ausgebildet sein, um ggf. Ventile in vier Radmodulen 246 direkt ansteuern zu können.

In einer hiervon abweichenden, nicht dargestellten Ausführungsform der Erfindung ist die Steuereinrichtung zweifach ausgebildet und auf zwei Achsmodule verteilt, welche jeweils zwei Radmodule 246 ersetzen. Diese zwei Achsmodule können zwar keine Fehlfunktionen des jeweils anderen Achsmoduls erkennen. Sie können jedoch bei einem Ausfall einer Steuereinrichtung die Funktionen der ausgefallenen Steuereinrichtung übernehmen. Die Steuereinrichtung bzw. Achsmodule sind auch in diesem Fall bevorzugt an jeweils einem Radkasten an den Achsen 12 und 14 angeordnet.

In einer weiteren alternativen und nicht dargestellten Ausführungsform sind die Bremsen an den Rädern 20 und/oder 56 zusätzlich oder alternativ elektromechanisch betätigbar. Ggf. kann somit auf Ventile in Radmodulen verzichtet werden. Eine pneumatische Redundanz kann vorhanden sein, ggf. jedoch auch entfallen. Zahlreiche Komponenten der Bremsanlage können mehrfach ausgebildet sein, um das Ausfallrisiko der gesamten Bremsanlage zu reduzieren. Insbesondere können alle elektrischen Komponenten zwei Anschlüsse für zwei Stromversorgungen, insbesondere mittels zweier Batterien, aufweisen. Mittels zwei Sensoren am Bremswertgeber 228 können zwei Bremsanforderungssignale erzeugt werden. Diese Bremsanforderungssignale können über zwei separate Leitungen an die Steuereinrichtung geleitet werden. Bei Ausfall einer Batterie bzw. einer Energieversorgungsquelle, eines Sensors im Bremswertgeber 69, einer elektrischen Leitung 68 bzw. Datenbusverbindung 230 oder im Falle der redundanten Ausbildung der Steuereinrichtung auch bei einem Ausfall einer Steuereinrichtung kann somit ein Fahrzeug immer noch sicher abgebremst und somit sicher betrieben werden.

Die Ausführungsbeispiele gemäß der Fig. 1 bis 11 zeigen besonders bevorzugte Ausführungsformen der Erfindung. Sie stellen jedoch keine Beschränkung dar. Insbesondere lässt sich die Erfindung auf Fahrzeuge mit beliebig vielen Achsen erweitern. Jedes erste oder zweite Modul kann Steuerungsfunktionen für ein oder mehrere Bremsen an ein oder mehreren Rädern und/oder Achsen übernehmen. Die Steuereinrichtung kann auf beliebig viele Module am Tragwerk des Fahrzeugs verteilt sein. Die Steuereinrichtung ist hierbei immer außerhalb einer Kabine des Fahrzeugs angeordnet.

Andere, insbesondere der Steuereinrichtung nachgeschaltete, Teile der Bremsanlage können jedoch auch in der Kabine angeordnet sein. Insbesondere ist es bspw. möglich, das zweite Modul 188 im siebten Ausführungsbeispiel gemäß Fig. 7 und damit die Steuerungslogik 59A in die Bremspedaleinrichtung 18 zu integrieren. Die Steuereinrichtung ist somit weiterhin in dem ersten Modul am Tragwerk angeordnet, während die Ansteuerung eines oder mehrerer Ventile mittels der Steuerungslogik 59A und die Aussteuerung eines pneumatischen Drucks mittels dieser Ventile in der Bremspedaleinrichtung 18 erfolgt.

Auch wenn in den beigefügten Zeichnungen nicht explizit dargestellt, weist eine erfindungsgemäße Bremsanlage vorteilhafterweise eine Feststellbremseinrichtung mit Federspeicherbremszylindern, insbesondere kombinierten Federspeicher-/Membranbremszylindern auf, wobei die Feststellbremsfunktion mittels der Federspeicherteile dieser Bremszylinder bereitstellbar ist. In diesem Fall ist die Feststellbremseinrichtung als elektropneumatische Feststellbremse ausgebildet. Zusätzlich oder alternativ ist die Feststellbremse als elektromechanische Feststellbremse ausgebildet, so dass die Feststellbremsfunktion mittels elektromechanischer Bremskomponenten bereitstellbar ist. Die Feststellbremsfunktion kann alternativ konventionell mit rein pneumatisch betriebenen Bauteilen, ohne elektrische Steuerung, dargestellt werden.

## Patentansprüche

1. Bremsanlage zur Abbremsung eines Lastkraftwagens oder Omnibusses (10; 92; 132; 238) mit einem Tragwerk (222; 240) und einer von dem Tragwerk (222; 240) getragenen und wenigstens einen Fahrersitz (226) aufweisenden Kabine (224; 242), wobei die Bremsanlage (16; 96; 124; 136; 170; 178; 184; 190; 200; 210; 216) eine in der Kabine (224; 242) angeordnete Bremspedaleinrichtung (18) mit einem Bremswertgeber (69) zur Erzeugung eines Bremsanforderungssignals aufweist, wobei die Bremsanlage (16; 96; 124; 136; 170; 178; 184; 190; 200; 210; 216) eine elektronische Steuereinrichtung (17; 99; 125; 141; 244) zur Steuerung der Bremsanlage (16; 96; 124; 136; 170; 178; 184; 190; 200; 210; 216) aufweist und wobei in Erwiderung auf das Bremsanforderungssignal von der Steuereinrichtung (17; 99; 125; 141; 244) wenigstens ein Bremskraftsteuersignal zur Steuerung, insbesondere zum vom Bremsanforderungssignal abhängigen Erhöhen, Halten und Vermindern, der Bremskraft von wenigstens einer Bremse der Bremsanlage (16; 96; 124; 136; 170; 178; 184; 190; 200; 210; 216) erzeugbar ist, **dadurch gekennzeichnet, dass** die Steuereinrichtung (17; 99; 125; 141; 244) außerhalb der Kabine (224; 242) an dem Tragwerk (222; 240) angeordnet ist.

2. Bremsanlage nach Anspruch 1, **gekennzeichnet durch** wenigstens ein erstes Modul (19; 98; 126, 128; 138; 174; 180; 186; 192; 204; 214; 218; 232; 246), welches die Steuereinrichtung (17; 99; 125; 141; 244) und wenigstens eine zur Funktionalität der Steuereinrichtung zusätzliche Funktionalität, insbesondere eines Feststellbremsmodulators, eines Antiblockiersystems, einer Fahrdynamikregeleinrichtung und/oder elektronisch gesteuerten Luftaufbereitungseinrichtung, aufweist.

3. Bremsanlage nach einem der vorhergehenden Ansprüche, **gekennzeichnet durch** wenigstens ein erstes Modul (19; 98; 126, 128; 138; 174; 180; 186; 192; 204; 214; 218; 232; 246), insbesondere ein im Bereich einer Hinterachse (14, 94) des Fahrzeugs (10; 92; 132; 238) montiertes Hinterachsmodul oder Hinterradmodul, welches die Steuereinrichtung (17; 99; 125; 141; 244) und zusätzlich eine Steuerungslogik (59B, 99A, 248) aufweist, von der das Bremskraftsteuersignal empfangbar und mittels der in Erwiderung auf das Bremskraftsteuersignal wenigstens eine erste Bremse an wenigstens einem Rad (56, 112) einer ersten Achse (14, 94), insbesondere der Hinterachse (14, 94), des Fahrzeugs (10; 92; 132; 238), insbesondere elektropneumatisch **durch** Ansteuerung ein oder mehrerer in dem ersten Modul (19; 98; 126, 128; 138; 174; 180; 186; 192; 204; 214; 218; 232; 246) vorgesehener Ventile, betätigbar ist.

4. Bremsanlage nach Anspruch 3, **gekennzeichnet durch** ein mit dem ersten Modul (19; 98; 126, 128; 138; 174; 180; 186; 192; 204; 214; 218; 232; 246) verbundenes erstes Radgeschwindigkeitssensiermittel (60) an dem Rad (56, 112) der ersten Achse (14, 112) und eine Antiblockiersystem (ABS)-Funktionalität des ersten Moduls (19; 98; 126, 128; 138; 174; 180; 186; 192; 204; 214; 218; 232; 246) für dieses Rad (56, 112), wobei in Erwiderung auf ein ermitteltes Blockieren bzw. erhöhten Schlupf des Rades (56, 112) mittels des ersten Moduls (19; 98; 126, 128; 138; 174; 180; 186; 192; 204; 214; 218; 232; 246) die erste Bremse an diesem Rad (56, 112) zumindest teilweise lösbar ist.

5. Bremsanlage nach einem der Ansprüche 3 oder 4, **gekennzeichnet durch** zwei oder mehr als zwei erste Module (126, 128; 138; 246) und eine Datenverbindung (130), insbesondere einen CAN-Datenbus, zwischen diesen Modulen (126, 128; 138; 246).

6. Bremsanlage nach einem der Ansprüche 3 bis 5, **gekennzeichnet durch** ein erstes Modul (19; 98; 126; 138; 204; 232; 246) mit darin integrierter Steuereinrichtung (17; 99; 125; 141; 244) und Steuerungslogik (59A, 99A, 141A) für eine zweite Bremse an einem Rad (20, 112, 140) einer zweiten Achse (12, 94, 134), insbesondere Vorderachse bzw. Zusatzachse, des Fahrzeugs (10; 92; 132; 238), wobei mittels der Steuerungslogik (59A, 99A, 141A) erzeugte Signale zum Betätigen der Bremse von dem ersten Modul (19; 98; 126; 138; 204; 232; 246) an ein zweites Modul (24; 102; 144; 202), insbesondere Vorderachsmodul, Zusatzachsmodul oder Zusatzradmodul, sendbar sind, wobei mittels des zweiten Moduls (24; 102; 144; 202) die zweite Bremse an dem Rad (20, 112, 140) der zweiten Achse (12, 94, 134), insbesondere elektropneumatisch mittels eines Ventils oder mehrerer Ventile in dem zweiten Modul (24; 102; 144; 202), betätigbar ist und wobei ggf. von dem zweiten Modul (24; 102; 144; 202) Messsignale der Betätigung, insbesondere Drucksignale, an das erste Modul (19; 98; 126; 138; 204; 232; 246) sendbar sind.

7. Bremsanlage nach Anspruch 6, **dadurch gekennzeichnet, dass** die Steuerungslogik (59A, 99A, 141A), welche in dem ersten Modul (19; 98; 126; 138; 204; 232; 246) angeordnet ist, Leistungselektronikkomponenten zur Bereitstellung von elektrischer Leistung für die Betätigung von Bremskomponenten, insbesondere Elektromagnetventilen oder elektromechanischen Aktuatoren, der zweiten Bremse an dem Rad (20, 112, 140) der zweiten Achse (12, 94, 134) aufweist, wobei diese Leistungselektronikkomponenten von der Steuerungslogik (59A, 99A, 141A) in dem ersten Modul (19; 98; 126; 138; 204; 232; 246) steuerbar sind und wobei diese Bremskomponenten über eine elektrische Leitung (59, 100, 142) von diesen Leistungselektronikkomponenten ansteuerbar sind.

8. Bremsanlage nach einem der Ansprüche 3 bis 5, **gekennzeichnet durch** ein erstes Modul (174; 180; 186; 192; 214; 218) mit darin integrierter Steuereinrichtung (17; 99; 125; 141; 244) und eine Steuerungslogik (59A, 99A, 141A) in einem zweiten Modul (176; 182; 188; 188'; 212; 220), insbesondere Vorderachsmodul, Zusatzachsmodul oder Zusatzradmodul, für eine zweite Bremse an einem Rad (20, 112, 140) einer zweiten Achse (12, 94, 134), insbesondere Vorderachse bzw. Zusatzachse, des Fahrzeugs (10, 92, 132, 238), wobei über eine Datenverbindung (172, 193), insbesondere einen CAN-Datenbus, von dem ersten Modul (174; 180; 186; 192; 214; 218) das Bremskraftsteuersignal an das zweite Modul (176; 182; 188; 188'; 212; 220) zur Verarbeitung in der Steuerungslogik (59A, 99A, 141A) sendbar ist und wobei mittels des zweiten Moduls (24; 102; 144; 202) die zweite Bremse an dem Rad (20, 112, 140) der zweiten Achse (12, 94, 132), insbesondere elektropneumatisch mittels eines Ventils oder mehrerer Ventile in dem zweiten Modul (24; 102; 144; 202), betätigbar ist.

9. Bremsanlage nach Anspruch 8, **dadurch gekennzeichnet, dass** die Steuerungslogik (59A, 99A, 141A), welche in dem zweiten Modul (176; 182; 188; 188'; 212; 220) angeordnet ist, Leistungselektronikkomponenten zur Bereitstellung von elektrischer Leistung für die Betätigung von Bremskomponenten, insbesondere Elektromagnetventilen oder elektromechanischen Aktuatoren, der zweiten Bremse an dem Rad (20, 112, 140) der zweiten Achse (12, 94, 134) aufweist, wobei diese Leistungselektronikkomponenten von der Steuerungslogik (59A, 99A, 141A) in dem zweiten Modul (176; 182; 188; 188'; 212; 220) steuerbar sind und wobei diese Bremskomponenten von diesen Leistungselektronikkomponenten ansteuerbar sind.

10. Bremsanlage nach einem der Ansprüche 6 bis 9, **gekennzeichnet durch** ein mit dem ersten Modul (19; 98; 126; 138; 174; 204; 214; 232; 246) verbundenes zweites Radgeschwindigkeitssensiermittel (38; 114) an dem Rad (20, 112, 140) der zweiten Achse (12, 94, 134) und eine Antiblockiersystem (ABS)-Funktionalität für dieses Rad (20, 112, 140), wobei in Erwiderung auf ein ermitteltes Blockieren bzw. erhöhter Schlupf des Rades (20, 112, 140) mittels des ersten Moduls (19; 98; 126; 138; 174; 204; 214; 232; 246), ggf. unter Verwendung wenigstens einer separaten Ventileinheit (28; 166), die zweite Bremse an diesem Rad (20, 112, 140) zumindest teilweise lösbar ist.

11. Bremsanlage nach Anspruch 8 oder 9, **gekennzeichnet durch** ein mit dem zweiten Modul (182) verbundenes zweites Radgeschwindigkeitssensiermittel (38) an dem Rad (20) der zweiten Achse (12) und eine Antiblockiersystem (ABS)-Funktionalität für dieses Rad (20), wobei mittels des Radgeschwindigkeitssensiermittels (38) Drehzahlen des Rades (20) sensierbar sind, Daten sensierter Drehzahlen von dem zweiten Modul (182) über die Datenverbindung (172) an das erste Modul (180) sendbar sind, von dem ersten Modul ein Blockieren bzw. erhöhter Schlupf des Rades (20) anhand dieser Daten ermittelbar ist und mittels des ersten Moduls (180), ggf. unter Verwendung wenigstens einer separaten Ventileinheit (28), die zweite Bremse an diesem Rad (20) zumindest teilweise lösbar ist.

12. Bremsanlage nach Anspruch 8 oder 9, **gekennzeichnet durch** ein mit dem zweiten Modul (182) verbundenes zweites Radgeschwindigkeitssensiermittel (38) an dem Rad (20) der zweiten Achse (12) und eine Antiblockiersystem (ABS)-Funktionalität für dieses Rad (20), wobei ein Blockieren bzw. erhöhter Schlupf des Rades (20) von dem zweiten Modul (182) ermittelbar ist, in Erwiderung auf ein ermitteltes Blockieren bzw. einen ermittelten erhöhten Schlupf des Rades (20) von dem zweiten Modul (182) Daten zum zumindest teilweisen Lösen der Bremse über die Datenverbindung (172) an das erste Modul (180) sendbar sind und mittels des ersten Moduls (180) ggf. unter Verwendung wenigstens einer separaten Ventileinheit (28) die zweite Bremse an diesem Rad (20) zumindest teilweise lösbar ist.

13. Bremsanlage nach Anspruch 8 oder 9, **gekennzeichnet durch** ein mit dem zweiten Modul (188; 188'; 220) verbundenes zweites Radgeschwindigkeitssensiermittel (38; 114) an dem Rad (20, 112) der zweiten Achse (19, 94) und eine Antiblockiersystem(ABS)-Funktionalität für dieses Rad (20, 112), wobei in Erwiderung auf ein sensiertes Blockieren bzw. erhöhten Schlupf des Rades (20; 112) mittels des zweiten Moduls (188, 188'; 220), ggf. unter Verwendung wenigstens einer separaten Ventileinheit (28, 198), die zweite Bremse an diesem Rad (20, 112) zumindest teilweise lösbar ist.

14. Bremsanlage nach einem der Ansprüche 6 bis 13, **gekennzeichnet durch** wenigstens zwei zweite Module (24, 102; 188, 188'), welche von der Steuereinrichtung (99) in dem ersten Modul (98; 192) ansteuerbar sind.

15. Bremsanlage nach einem der vorhergehenden Ansprüche, **gekennzeichnet durch** ein oder mehrere Ventile zur elektrischen Modulation eines pneumatischen Druckes, wenigstens eine Bremse mit einem **durch** diesen Druck über eine Druckluftleitung (34, 132, 194) betätigbaren Bremszylinder (30, 108, 154) und ggf. eine Ventileinrichtung (28, 166, 198) zum Entlüften der Druckluftleitung (34, 132, 194).

16. Bremsanlage nach Anspruch 15, **gekennzeichnet durch** eine pneumatische Redundanz, wobei der pneumatische Druck direkt mittels der Betätigung eines Bremspedals der Bremspedaleinrichtung (18) aussteuerbar ist.

17. Bremsanlage nach einem der vorhergehenden Ansprüche, **gekennzeichnet durch** wenigstens eine elektromechanisch betätigbare Bremse.

18. Bremsanlage nach einem der Ansprüche 2 bis 17, **gekennzeichnet durch** wenigstens einen Sensor, insbesondere einen Beschleunigungssensor, einen Gierratensensor und/oder einen Neigungssensor, zur Sensierung eines Fahrzustandes, welcher zusammen mit der Steuereinrichtung (17; 99; 125; 141; 244) in dem ersten Modul (19; 98; 126, 128; 138; 174; 180; 186; 192; 204; 214; 218; 232; 246) angeordnet ist.

19. Bremsanlage nach einem der vorhergehenden Ansprüche, **gekennzeichnet durch** eine redundante Ausbildung der Steuereinrichtung (244), wobei mehrere Bremskraftsteuersignale zum Betätigen einer Bremse des Fahrzeugs (238) mittels mehrerer Steuereinrichtungen (244) erzeugbar und diese Bremse mittels jedes dieser Bremskraftsteuersignale, insbesondere mittels eines Bremskraftsteuersignals einer als funktionsfähig erkannten Steuereinrichtung (244), betätigbar ist.

20. Bremsanlage nach Anspruch 19, **gekennzeichnet durch** eine vierfache Ausbildung der Steuereinrichtung (244), insbesondere in vier Radmodulen (246).

21. Bremsanlage nach einem der vorhergehenden Ansprüche, **gekennzeichnet durch** eine Schnittstelle (228) und eine Datenbusverbindung (230) zwischen der Schnittstelle (228) und der Steuereinrichtung (244), wobei über die Schnittstelle (228) und die Datenbusverbindung (230) das Bremsanforderungssignal an die Steuereinrichtung (244) sendbar ist.

22. Bremsanlage nach Anspruch 21, **dadurch gekennzeichnet, dass** die Schnittstelle (228) in die Bremspedaleinrichtung (18) integriert ist.

23. Bremsanlage nach einem der Ansprüche 21 oder 22, **dadurch gekennzeichnet, dass** über die Schnittstelle (228) und die Datenbusverbindung (230) Daten von und/oder zu weiteren Einrichtungen, insbesondere Betätigungseinrichtungen und/oder Anzeigeeinrichtungen, in der Kabine (224) und/oder am Tragwerk (222) sendbar sind.

## Claims

1. Brake system for braking a lorry or bus (10; 92; 132; 238) having a supporting frame (222; 240) and a cabin (224; 242) which is supported by the supporting frame (222; 240) and has at least one driver's seat (226), wherein the brake system (16; 96; 124; 136; 170; 178; 184; 190; 200; 210; 216) has a brake pedal device (18) which is arranged in the cabin (224; 242) and has a brake value signal generator (69) for generating a braking request signal, wherein the brake system (16; 96; 124; 136; 170; 178; 184; 190; 200; 210; 216) has an electronic control device (17; 99; 125; 141; 244) for controlling the brake system (16; 96; 124; 136; 170; 178; 184; 190; 200; 210; 216), and wherein in response to the brake request signal the control device (17; 99; 125; 141; 244) can generate at least one braking force control signal for controlling, in particular for increasing, maintaining and reducing the braking force of at least one brake of the brake system (16; 96; 124; 136; 170; 178; 184; 190; 200; 210; 216) as a function of the braking request signal, **characterized in that** the control device (17; 99; 125; 141; 244) is arranged outside the cabin (224, 242) on the supporting structure (222; 240).

2. Brake system according to Claim 1, **characterized by** at least one first module (19; 98; 126, 128; 138; 174; 180; 186; 192; 204; 214; 218; 232; 246) which has the control device (17; 99; 125; 141; 244) and at least one functionality in addition to the functionality of the control device, in particular the functionality of a parking brake modulator, of an anti-lock brake system, of a vehicle movement dynamics control system, and/or electronically controlled air conditioning device.

3. Brake system according to one of the preceding claims, **characterized by** at least one first module (19; 98; 126, 128; 138; 174; 180; 186; 192; 204; 214; 218; 232; 246), in particular a rear axle module or rear wheel module which is mounted in the region of a rear axle (14; 94) of the vehicle (10; 92; 132; 238) and which has the control device (17; 99; 125; 141; 244) and in addition a control logic (59B, 99A, 248), which can receive the braking force control signal and can activate, in response to the braking force control signal, at least one first brake on at least one wheel (56, 112) of a first axle (14, 94), in particular the rear axle (14, 94), of the vehicle (10; 92; 132; 238), in particular electro-pneumatically by actuating one or more valves provided in the first module (19; 98; 126, 128; 138; 174; 180; 186; 192; 204; 214; 218; 232; 246).

4. Brake system according Claim 3, **characterized by** a first wheel speed-sensing means (60), connected to the first module (19; 98; 126, 128; 138; 174; 180; 186; 192; 204; 214; 218; 232; 246), on the wheel (56, 112) of the first axle (14, 112) and an anti-lock brake system (ABS) functionality of the first module (19; 98; 126, 128; 138; 174; 180; 186; 192; 204; 214; 218; 232; 246) for this wheel (56, 112), wherein, in response to blocking or increased slip of the wheel (56, 112) being determined, the first module (19; 98; 126, 128; 138; 174; 180; 186; 192; 204; 214; 218; 232; 246) can at least partially release the first brake on this wheel (56, 112).

5. Brake system according to one of Claims 3 and 4, **characterized by** two or more than two first modules (126, 128; 138; 246) and a data connection (130), in particular a CAN data bus, between these modules (126, 128; 138; 246).

6. Brake system according to one of Claims 3 to 5, **characterized by** a first module (19; 98; 126; 138; 204; 232; 246) with a control device (17; 99; 125; 141; 244) integrated therein and a control logic (59A, 99A, 141A) for a second brake on a wheel (20, 112, 140) of a second axle (12, 94, 134), in particular a front axle or additional axle, of the vehicle (10; 92; 132; 238), wherein signals generated by means of the control logic (59A, 99A, 141A) can be transmitted to a second module (24; 102; 144; 202), in particular front axle module, additional axle module or additional wheel module from the first module (19; 98; 126; 138; 204; 232; 246) in order to activate the brake, wherein the second module (24; 102; 144; 202) can activate the second brake on the wheel (20, 112, 140) of the second axle (12, 94, 134), in particular electro-pneumatically by means of a valve or a plurality of valves in the second module (24; 102; 144; 202), and wherein, if appropriate, the second module (24; 102; 144; 202) can transmit measurement signals for the activation process, in particular pressure signals, to the first module (19; 98; 126; 138; 204; 232; 246).

7. Brake system according to Claim 6, **characterized in that** the control logic (59A, 99A, 141A), which is arranged in the first module (19; 98; 126; 138; 204; 232; 246), has power electronics components for making available electrical power for activating braking components, in particular solenoid valves or electromechanical actuators, to the second brake on the wheel (20, 112, 140) of the second axle (12, 94, 134), wherein these power electronics components can be controlled by the control logic (59A, 99A, 141A) in the first module (19; 98; 126; 138; 204; 232; 246), and wherein these brake components can be actuated by these power electronics components via an electrical line (59, 100, 142).

8. Brake system according to one of Claims 3 to 5, **characterized by** a first module (174; 180; 186; 192; 214; 218) with control device (17; 99; 125; 141; 244) integrated therein and a control logic (59A, 99A, 141A) in a second module (176; 182; 188; 188'; 212; 220), in particular a front axle module, additional axle module or additional wheel module, for a second brake on a wheel (20, 112, 140) of a second axle (12, 94, 134), in particular a front axle or additional axle, of the vehicle (10, 92, 132, 238), wherein the first module (174; 180; 186; 192; 214; 218) can transmit the braking force control signal via a data link (172, 193), in particular a CAN data bus, to the second module (176; 182; 188; 188'; 212; 220) for processing in the control logic (59A, 99A, 141A), and wherein the second module (24; 102; 144; 202) can activate the second brake on the wheel (20, 112, 140) of the second axle (12, 94, 132), in particular electro-pneumatically by means of a valve or a plurality of valves in the second module (24; 102; 144; 202).

9. Brake system according to Claim 8, **characterized in that** the control logic (59A, 99A, 141A), which is arranged in the second module (176; 182; 188; 188'; 212; 220), has power electronics components for making available electrical power for activating brake components, in particular solenoid valves or electromechanical actuators, of the second brake on the wheel (20, 112, 140) of the second axle (12, 94, 134), wherein these power electronics components can be controlled by the control logic (59A, 99A, 141A) in the second module (176; 182; 188; 188'; 212; 220), and wherein these brake components can be actuated by these power electronics components.

10. Brake system according to one of Claims 6 to 9, **characterized by** a second wheel speed-sensing means (38; 114), connected to the first module (19; 98; 126; 138; 174; 204; 214; 232; 246), on the wheel (20, 112, 140) of the second axle (12, 94, 134) and an anti-lock brake system (ABS) functionality for this wheel (20, 112, 140), wherein, in response to blocking or increased slip of the wheel (20, 112, 140) being determined, the first module (19; 98; 126; 138; 174; 204; 214; 232; 246) can at least partially release the second brake on this wheel (20, 112, 140), if appropriate using at least one separate valve unit (28; 166).

11. Brake system according to Claim 8 or 9, **characterized by** a second wheel speed-sensing means (38), connected to the second module (182) on the wheel (20) of the second axle (12) and an anti-lock brake system (ABS) functionality for this wheel (20), wherein the wheel speed-sensing means (38) can sense rotational speeds of the wheel (20), data of sensed rotational speeds can be transmitted from the second module (182) to the first module (180) via the data link (172), the first module can determine locking or increased slip of the wheel (20) on the basis of this data, and the first module (180) can at least partially release the second brake on this wheel (20), if appropriate using at least one separate valve unit (28).

12. Brake system according to Claim 8 or 9, **characterized by** a second wheel speed-sensing means (38), connected to the second module (182), on the wheel (20) of the second axle (12) and an anti-lock brake system (ABS) functionality for this wheel (20), wherein the second module (182) can determine locking or increased slip of the wheel (20) in response to locking or increased slip of the wheel (20) being determined the second module (182) can transmit data to the first module (180) via the data link (172) for the at least partial release of the brake, and the first module (180) can at least partially release the second brake on this wheel (20), if appropriate using at least one separate valve unit (28).

13. Brake system according to Claim 8 or 9, **characterized by** a second wheel speed-sensing means (38; 114), connected to the second module (188; 188'; 220) on the wheel (20, 112) of the second axle (19, 94), and an anti-lock brake system (ABS) functionality for this wheel (20, 112), wherein, in response to sensed locking or increased slip of the wheel (20; 112) the second module (188, 188'; 220) can at least partially release the second brake on this wheel (20, 112), if appropriate using at least one separate valve unit (28, 198).

14. Brake system according to one of Claims 6 to 13, **characterized by** at least two second modules (24, 102; 188, 188') which can be actuated by the control device (99) in the first module (98; 192).

15. Brake system according to one of the preceding claims, **characterized by** one or more valves for electrically modulating a pneumatic pressure, at least one brake with a brake cylinder (30, 108, 154) which can be activated by this pressure via a compressed air line (34, 132, 194), and if appropriate a valve device (28, 166, 198) for venting the compressed air line (34, 132, 194).

16. Brake system according to Claim 15, **characterized by** a pneumatic redundancy, wherein the pneumatic pressure can be modulated directly by means of the activation of a brake pedal of the brake pedal device (18).

17. Brake system according to one of the preceding claims, **characterized by** at least one brake which can be activated electro-mechanically.

18. Brake system according to one of Claims 2 to 17, **characterized by** at least one sensor, in particular an acceleration sensor, a yaw rate sensor and/or an inclination sensor, for sensing a driving state, which sensor is arranged, together with the control device (17; 99; 125; 141; 244), in the first module (19; 98; 126, 128; 138; 174; 180; 186; 192; 204; 214; 218; 232; 246).

19. Brake system according to one of the preceding claims, **characterized by** a redundant design of the control device (244), wherein a plurality of braking force control signals can be generated in order to activate a brake of the vehicle (238) by means of a plurality of control devices (244), and this brake can be activated by means of each of these braking force control signals, in particular by means of a braking force control signal of a control device (244) which is detected as being functionally capable.

20. Brake system according to Claim 19, **characterized by** a quadruple design of the control device (244), in particular in four wheel modules (246).

21. Brake system according to one of the preceding claims, **characterized by** an interface (228) and a data bus link (230) between the interface (228) and the control device (244), wherein the braking request signal can be transmitted to the control device (244) via the interface (228) and the data bus link (230).

22. Brake system according to Claim 21, **characterized in that** the interface (228) is integrated into the brake pedal device (18).

23. Brake system according to one of Claims 21 and 22, **characterized in that** data can be transmitted from and/or to further devices, in particular activation devices and/or display devices, in the cabin (224) and/or on the supporting frame (222), via the interface (228) and the data bus link (230).

## Revendications

1. Système de frein servant au freinage d'un poids lourd ou d'un omnibus (10 ; 92 ; 132 ; 238) équipé d'un châssis porteur (222 ; 240) et d'une cabine (224 ; 242) supportée par le châssis porteur (222 ; 240) et comportant au moins un siège de conducteur (226), le système de frein (16 ; 96 ; 124 ; 136 ; 170 ; 178 ; 184 ; 190 ; 200 ; 210 ; 216) comportant un dispositif de pédale de frein (18) disposé dans la cabine (224 ; 242) équipé d'un capteur de valeur de freinage (69) servant à produire un signal de demande de freinage, le système de frein (16 ; 96 ; 124 ; 136 ; 170 ; 178 ; 184 ; 190 ; 200 ; 210 ; 216) comportant un dispositif de commande électronique (17 ; 99 ; 125 ; 141 ; 244) servant à commander le système de frein (16 ; 96 ; 124 ; 136 ; 170 ; 178 ; 184 ; 190 ; 200 ; 210 ; 216) et, en réponse au signal de demande de freinage du dispositif de commande (17 ; 99 ; 125 ; 141 ; 244), au moins un signal de commande de force de freinage servant à commander, notamment augmenter, maintenir ou réduire, la force de freinage en fonction du signal de demande de freinage pouvant être émis par au moins un frein du système de frein (16 ; 96 ; 124 ; 136 ; 170 ; 178 ; 184 ; 190 ; 200 ; 210 ; 216), **caractérisé en ce que** le dispositif de commande (17 ; 99 ; 125 ; 141 ; 244) est disposé à l'extérieur de la cabine (224 ; 242) au niveau du châssis porteur (222 ; 240).

2. Système de frein selon la revendication 1, **caractérisé par** la présence d'au moins un premier module (19 ; 98 ; 126, 128 ; 138 ; 174 ; 180 ; 186 ; 192 ; 204 ; 214 ; 218 ; 232 ; 246) comportant le dispositif de commande (17 ; 99 ; 125 ; 141 ; 244) et d'au moins une fonctionnalité supplémentaire servant de fonctionnalité du dispositif de commande, notamment un modulateur de frein par dépistage, un système d'antiblocage, un dispositif de régulation de dynamique de conduite et/ou un dispositif de préparation d'air à commande électronique.

3. Système de frein selon l'une quelconque des revendications précédentes, **caractérisé par** la présence d'au moins un premier module (19 ; 98 ; 126, 128 ; 138 ; 174 ; 180 ; 186 ; 192 ; 204 ; 214 ; 218 ; 232 ; 246), notamment d'un module d'essieu arrière ou module de roue arrière monté dans la région d'un essieu arrière (14, 94) du véhicule (10 ; 92 ; 132 ; 238), ledit module comportant le dispositif de commande (17 ; 99 ; 125 ; 141 ; 244) ainsi qu'une logique de commande (59B, 99A, 248) pouvant recevoir le signal de commande de force de freinage et à l'aide de laquelle, en réponse au signal de commande de force de freinage, au moins un premier frein peut être actionné au niveau d'au moins une roue (56, 112) d'un premier essieu (14, 94), notamment l'essieu arrière (14, 94) du véhicule (10 ; 92 ; 132 ; 238), notamment de façon électropneumatique par excitation d'une ou de plusieurs soupapes prévues dans le premier module (19 ; 98 ; 126, 128 ; 138 ; 174 ; 180 ; 186 ; 192 ; 204 ; 214 ; 218 ; 232 ; 246).

4. Système de frein selon la revendication 3, **caractérisé par** la présence d'un premier moyen de détection de vitesse de roue (60) prévu au niveau de la roue (56, 112) du premier essieu (14, 112) et relié au premier module (19 ; 98 ; 126, 128 ; 138 ; 174 ; 180 ; 186 ; 192 ; 204 ; 214 ; 218 ; 232 ; 246) et d'une fonctionnalité de système d'antiblocage (ABS) du premier module (19 ; 98 ; 126, 128 ; 138 ; 174 ; 180 ; 186 ; 192 ; 204 ; 214 ; 218 ; 232 ; 246) pour cette roue (56, 112), le premier frein pouvant être déclenché au moins en partie au niveau de cette roue (56, 112) à l'aide du premier module (19 ; 98 ; 126, 128 ; 138 ; 174 ; 180 ; 186 ; 192 ; 204 ; 214 ; 218 ; 232 ; 246) en réponse à un blocage calculé et/ou à un patinage accru de la roue (56, 112).

5. Système de frein selon l'une quelconque des revendications 3 ou 4, **caractérisé par** la présence de deux modules ou plus prenant la forme des deux premiers modules (126, 128 ; 138 ; 246) et d'une liaison de données (130), notamment un bus de données CAN, prévu entre ces modules (126, 128 ; 138 ; 246).

6. Système de frein selon l'une quelconque des revendications 3 à 5, **caractérisé par** la présence d'un premier module (19 ; 98 ; 126 ; 138 ; 204 ; 232 ; 246) équipé d'un dispositif de commande (17 ; 99 ; 125 ; 141 ; 244) intégré à l'intérieur et d'une logique de commande (59A, 99A, 141A) prévue pour un deuxième frein agissant au niveau d'une roue (20, 112, 140) d'un deuxième essieu (12, 94, 134), notamment l'essieu avant et/ou un essieu supplémentaire, du véhicule (10 ; 92 ; 132 ; 238), les signaux produits pouvant être envoyés à l'aide de la logique de commande (59A, 99A, 141A) pour actionner le frein du premier module (19 ; 98 ; 126 ; 138 ; 204 ; 232 ; 246) au niveau d'un deuxième module (24 ; 102 ; 144 ; 202), notamment un module d'essieu avant, un module d'essieu supplémentaire ou module de roue supplémentaire, le deuxième frein agissant au niveau de la roue (20, 112, 140) du deuxième essieu (12, 94, 134), pouvant être actionné à l'aide du deuxième module (24 ; 102 ; 144 ; 202), notamment de façon électropneumatique à l'aide d'une soupape ou de plusieurs soupapes prévues dans le deuxième module (24 ; 102 ; 144 ; 202) et des signaux de mesure de l'actionnement, notamment des signaux de pression, pouvant être envoyés au premier module (19 ; 98 ; 126 ; 138 ; 204 ; 232 ; 246), le cas échéant par le deuxième module (24 ; 102 ; 144 ; 202).

7. Système de frein selon la revendication 6, **caractérisé en ce que** la logique de commande (59A, 99A, 141A) disposée dans le premier module (19 ; 98 ; 126 ; 138 ; 204 ; 232 ; 246) comprend des composants électroniques de puissance servant à mettre à disposition une puissance électrique pour l'actionnement des composants du frein, notamment des électrovannes ou des actionneurs électromécaniques, du deuxième frein agissant au niveau de la roue (20, 112, 140) du deuxième essieu (12, 94, 134), ces composants électroniques de puissance pouvant être commandés par la logique de commande (59A, 99A, 141A) prévue dans le premier module (19 ; 98 ; 126 ; 138 ; 204 ; 232 ; 246) et ces composants du frein pouvant être excités par ces composants électroniques de puissance par le biais d'une conduite électrique (59, 100, 142).

8. Système de frein selon l'une quelconque des revendications 3 à 5, **caractérisé par** la présence d'un premier module (174 ; 180 ; 186 ; 192 ; 214 ; 218) équipé d'un dispositif de commande (17 ; 99 ; 125 ; 141 ; 244) intégré à l'intérieur et d'une logique de commande (59A, 99A, 141A) prévue dans un deuxième module (176 ; 182 ; 188 ; 188' ; 212 ; 220), notamment un module d'essieu avant, un module d'essieu supplémentaire ou un module de roue supplémentaire, pour un deuxième frein agissant au niveau d'une roue (20, 112, 140) d'un deuxième essieu (12, 94, 134), notamment d'un essieu avant et/ou d'un essieu supplémentaire, du véhicule (10, 92, 132, 238), le signal de commande de force de freinage du deuxième module (176 ; 182 ; 188 ; 188' ; 212 ; 220) pouvant être envoyé par le premier module (174 ; 180 ; 186 ; 192 ; 214 ; 218) par le biais d'une liaison de données (172, 193), notamment d'un bus de données CAN, pour être traité dans la logique de commande (59A, 99A, 141A) et le deuxième frein agissant au niveau de la roue (20, 112, 140) du deuxième essieu (12, 94, 132), notamment de façon électropneumatique à l'aide d'une soupape ou de plusieurs soupapes prévues dans le deuxième module (24 ; 102 ; 144 ; 202), pouvant être actionné à l'aide du deuxième module (24 ; 102 ; 144 ; 202).

9. Système de frein selon la revendication 8, **caractérisé en ce que** la logique de commande (59A, 99A, 141A) disposée dans le deuxième module (176 ; 182 ; 188 ; 188' ; 212 ; 220) comporte des composants électroniques de puissance servant à mettre à disposition une puissance électrique pour l'actionnement de composants du frein, notamment des électrovannes ou des actionneurs électromécaniques, du deuxième frein agissant au niveau de la roue (20, 112, 140) du deuxième essieu (12, 94, 134), ces composants électroniques de puissance pouvant être commandés par la logique de commande (59A, 99A, 141A) prévue dans le deuxième module (176 ; 182 ; 188 ; 188' ; 212 ; 220) et ces composants du frein pouvant être excités par ces composants électroniques de puissance.

10. Système de frein selon l'une quelconque des revendications 6 à 9, **caractérisé par** la présence d'un deuxième moyen de détection de vitesse de roue (38 ; 114) prévu au niveau de la roue (20, 112, 140) du deuxième essieu (12, 94, 134) et relié au premier module (19 ; 98 ; 126 ; 138 ; 174 ; 204 ; 214 ; 232 ; 246) et d'une fonctionnalité de système d'antiblocage (ABS) prévue pour cette roue (20, 112, 140), le deuxième frein agissant au niveau de cette roue (20, 112, 140) pouvant être déclenché au moins en partie à l'aide du premier module (19 ; 98 ; 126 ; 138 ; 174 ; 204 ; 214 ; 232 ; 246), le cas échéant par utilisation d'au moins une unité de soupape (28 ; 166) séparée, en réponse à un blocage calculé et/ou à un patinage accru de la roue (20, 112, 140).

11. Système de frein selon la revendication 8 ou 9, **caractérisé par** la présence d'un deuxième moyen de détection de vitesse de roue (38) prévu au niveau de la roue (20) du deuxième essieu (12) et relié au deuxième module (182) et d'une fonctionnalité de système d'antiblocage (ABS) prévue pour cette roue (20), les nombres de tours de la roue (20) pouvant être détectées à l'aide du moyen de détection de vitesse de roues (38), les données relatives aux nombres de tours pouvant être envoyées au premier module (180) par le deuxième module (182) par le biais de la liaison de données (172), un blocage et/ou un patinage accru de la roue (20) pouvant être calculé par le premier module à l'aide de ces données et le deuxième frein agissant au niveau de cette roue (20) pouvant être au moins en partie déclenché à l'aide du premier module (180), le cas échéant par utilisation d'au moins une unité de soupape (28) séparée.

12. Système de frein selon la revendication 8 ou 9, **caractérisé par** la présence d'un deuxième moyen de détection de vitesse de roue (38) prévu au niveau de la roue (20) du deuxième essieu (12) et relié au deuxième module (182) et d'une fonctionnalité de système d'antiblocage (ABS) prévue pour cette roue (20), un blocage et/ou un patinage accru de la roue (20) pouvant être calculé par le deuxième module (182), en réponse à un blocage calculé et/ou à un patinage accru calculé de la roue (20), les données permettant le déclenchement au moins partiel du frein pouvant être envoyées au premier module (180) par le deuxième module (182) par le biais de la liaison de données (172) et le deuxième frein agissant au niveau de cette roue (20) pouvant être déclenché au moins en partie à l'aide du premier module (180), le cas échéant par utilisation d'au moins une unité de soupape séparée (28).

13. Système de frein selon la revendication 8 ou 9, **caractérisé par** la présence d'un deuxième moyen de détection de vitesse de roue (38 ; 114) prévu au niveau de la roue (20, 112) du deuxième essieu (19, 94) et relié au deuxième module (188 ; 188' ; 220) et d'une fonctionnalité de système d'antiblocage (ABS) prévue pour cette roue (20, 112), le deuxième frein agissant au niveau de cette roue (20, 112) pouvant être déclenché au moins en partie à l'aide du deuxième module (188, 188' ; 220), le cas échéant par utilisation d'au moins une unité de soupape (28, 198) séparée, en réponse à un blocage détecté et/ou à un patinage accru de la roue (20 ; 112).

14. Système de frein selon l'une quelconque des revendications 6 à 13, **caractérisé par** la présence d'au moins deux deuxièmes modules (24, 102 ; 188, 188') pouvant être excités par le dispositif de commande (99) prévu dans le premier module (98 ; 192).

15. Système de frein selon l'une quelconque des revendications précédentes, **caractérisé par** la présence d'une ou de plusieurs soupapes servant à la modulation électrique d'une pression pneumatique, d'au moins un frein pourvu d'un cylindre de frein (30, 108, 154) pouvant être actionné par cette pression par le biais d'une conduite d'air sous pression (34, 132, 194) et le cas échéant d'un dispositif de soupape (28, 166, 198) permettant de purger la conduite d'air sous pression (34, 132, 194).

16. Système de frein selon la revendication 15, **caractérisé par** la présence d'une redondance pneumatique, la pression pneumatique pouvant être directement commandée par actionnement d'une pédale de frein du dispositif de pédale de frein (18).

17. Système de frein selon l'une quelconque des revendications précédentes, **caractérisé par** la présence d'au moins un frein à actionnement électromécanique.

18. Système de frein selon l'une quelconque des revendications 2 à 17, **caractérisé par** la présence d'au moins un capteur, notamment un capteur d'accélération, un capteur de vitesse de lacet et/ou un capteur d'inclinaison, servant à la détection d'un état de conduite, ledit capteur étant disposé conjointement avec le dispositif de commande (17 ; 99 ; 125 ; 141 ; 244) dans le premier module (19 ; 98 ; 126, 128 ; 138 ; 174 ; 180 ; 186 ; 192 ; 204 ; 214 ; 218 ; 232 ; 246).

19. Système de frein selon l'une quelconque des revendications précédentes, **caractérisé par** la présence d'une formation redondante du dispositif de commande (244), plusieurs signaux de commande de force de freinage pouvant être produits pour actionner un frein du véhicule (238) à l'aide de plusieurs dispositifs de commande (244) et ce frein pouvant être actionné à l'aide de chacun de ces signaux de commande de force de freinage, notamment à l'aide d'un signal de commande de force de freinage d'un dispositif de commande (244) perçu comme étant en état de fonctionnement.

20. Système de frein selon la revendication 19, **caractérisé par** la présence d'une quadruple formation du dispositif de commande (244), notamment sous la forme de quatre modules de roue (246).

21. Système de frein selon l'une quelconque des revendications précédentes, **caractérisé par** la présence d'une interface (228) et d'une liaison de bus de données (230) positionnée entre l'interface (228) et le dispositif de commande (244), le signal de demande de freinage pouvant être envoyé au dispositif de commande (244) par le biais de l'interface (228) et de la liaison de bus de données (230).

22. Système de frein selon la revendication 21, **caractérisé en ce que** l'interface (228) est intégrée dans le dispositif de pédale de frein (18).

23. Système de frein selon l'une quelconque des revendications 21 ou 22, **caractérisé en ce que** les données en provenance et/ou à destination des dispositifs supplémentaires, notamment des dispositifs d'actionnement et/ou des dispositifs d'affichage, peuvent être envoyées dans la cabine (224) et/ou au châssis porteur (222) par le biais de l'interface (228) et de la liaison de bus de données (230).
